# EUROPEAN PATENT SPECIFICATION

(11) **EP 3 328 901 B1**
(45) Date of publication and mention of the grant of the patent: **11.09.2019**
(21) Application number: 16745715.9
(22) Date of filing: 29.07.2016
(51) Int. Cl.: C08B 37/00, C08L 5/00, A23L 29/25, A23L 2/52

(54) **GUM ARABIC FROM ACACIA SEYAL**
GUMMI ARABICUM VOM ACACIA SEYAL
GOMME ARABIQUE DE ACACIA SEYAL

(30) Priority: 30.07.2015 EP 15179164
(43) Date of publication of application: 06.06.2018
(73) Proprietor: Döhler GmbH, 64295 Darmstadt (DE)
(72) Inventor: AL-ASSAF, Saphwan, Wrexham Wales LL11 2BV (GB); LUKANOWSKI, Johann, 64319 Pfungstadt (DE); TRETZEL, Joachim, 64342 Seeheim-Jugenheim (DE)
(74) Representative: dompatent von Kreisler Selting Werner - Partnerschaft von Patent- und Rechtsanwälten mbB
(86) International application number: PCT/EP2016/068135
(87) International publication number: WO 2017/017248

(56) References cited:
- WO-A1-2015/059062
- JP-A- 2008 297 359
- US-A1- 2005 124 805
- MARINA ANDRES-BRULL ET AL: "Studies on acacia gums: Part VII effect of exudates form and tree age on the characteristics of Acacia seyal var. seyal and Acacia seyal var. fistula", FOOD HYDROCOLLOIDS, vol. 45, 1 March 2015 (2015-03-01), pages 279-285, XP055217168, ISSN: 0268-005X, DOI: 10.1016/j.foodhyd.2014.11.028 cited in the application
- AL-ASSAF ET AL: "Characterization and properties of Acacia senegal (L.) Willd. var. senegal with enhanced properties (Acacia (sen) SUPER GUM(TM)): Part 1-Controlled maturation of Acacia senegal var. senegal to increase viscoelasticity, produce a hydrogel form and convert a poor into a good emulsifier", FOOD HYDROCOLLOIDS, ELSEVIER BV, NL, vol. 21, no. 3, 16 November 2006 (2006-11-16), pages 319-328, XP005770872, ISSN: 0268-005X, DOI: 10.1016/J.FOODHYD.2006.04.011
- SIMON P. EGADU ET AL: "Uses of tree species producing gum arabic in Karamoja, Uganda", AFRICAN JOURNAL OF ECOLOGY, vol. 45, no. s1, 1 March 2007 (2007-03-01) , pages 17-21, XP055217261, ISSN: 0141-6707, DOI: 10.1111/j.1365-2028.2007.00732.x

## Description

### Field of the Invention

The present invention relates to gum arabic, methods of improving the properties of gum arabic and uses of gum arabic.

### Background of the invention

Acacia gum (gum arabic) is the oldest and best known of all the tree gum exudates. It is obtained from the stems and branches of *Acacia* trees which grow widely across Sub-Saharan Africa, from Mauritania, Senegal and Mali in the west, through Burkina Faso, Niger, northern parts of Nigeria and Chad to Sudan, Eritrea, Ethiopia and Somalia in the east, and northern parts of Uganda and Kenya. They form the so called "gum belt". Gum arabic was introduced to Europe through various Arabian ports and came to be called "Gum Arabic" after its place of origin or port of export.

*Acacia* which is one of the most popular vegetations of the plant kingdom and is a cosmopolitan genus containing in excess of 1,350 species (Maslin *et al.,* 2003). *Acacia senegal* and *Acacia seyal* remain the only commercially exploited species of the whole *Acacia* resource.

*Acacia senegal* belongs to the *Vulgares* series while *A. seyal* to the *Gummiferae* series. *A. senegal* is generally regarded as occurring as four varieties. These are: *A. senegal* (L.) Willd var. *senegal* (syn. *A. verek* Guill. & Perry); *A. senegal* (L.) Willd var. *kerensis Schweinf; A. senegal* (L.) Willd var. *rostata Brenan;* and *A. senegal* (L.) Willd var. *leiorhachis Brenan* (syn. *A. circummarginata* Chiov.).

*Acacia seyal* occurs as two varieties: *A. seyal* Del. var. *seyal*; and *A. seyal* Del. var. *fistula* (*Schweinf*) *Oliv* (Coppen, 1995). According to the Joint Expert Committee for Food Additives (JECFA) of FAO gum arabic is defined as a dried exudate obtained from the stems and branches of *Acacia senegal* (L.) Willdenow or *Acacia seyal* (fam. *Leguminosae*) (JECFA-FAO, 1998).

The systematic wounding of acacia tree to induce gum exudation (Gummosis) is called tapping and is considered the standard practice applied for *A. senegal.* On the other hand, *A. seyal* is generally collected from natural exudation without tapping but there is some evidence that it is applied in certain location in Sudan. In certain gum sources the natural exudates were noted as being darker in colour compared to gums obtained by tapping (Anderson & Bridgeman, 1985).

Recently, Andres-Brull et al reported that tannin is contaminant from the acacia bark and found to correlate with the exudates form (i.e. seep or noldules) (Andres-Brull et al., 2015). The highest concentration of tannin is associated with the exudate which has more contact with the bark during the process of gummosis. The gum exudates from *seyal* do not harden quickly and hence has acquired the name "friable".

Gum arabic is made up of complex branched polysaccharides as well as some proteinaceous material which is integral to its structure. Upon hydrolysis of gum arabic: galactopyranose, arabinopyranose, arabinofuranose, rhamnopyranose, glucopyranosyl uronic acid and 4-O-methyl glucuropyranosyl uronic acid have been identified (Anderson & Stoddart, 1966; Anderson *et al.,* 1967).

*A. seyal* consists of the same sugar residue as *A. senegal,* but has lower rhamnose and glucuronic acid contents and higher arabinose and 4-O-methyl glucuronic acid contents (Jurasek et al., 1995). *A. seyal* has lower nitrogen contents than *A. senegal* (Jurasek et al., 1993), and the specific optical rotation of the two species is different (Biswas & Phillips, 2003). *A. seyal* is proposed to be more highly branched and more compact in structure than *A. senegal* (Flindt et al., 2005; Hassan et al., 2005; Street & Anderson, 1983).

Street and Anderson (Street & Anderson, 1983) in a reinterpretation of the work of Churms *et al.* (Churms et al., 1983) suggested different structures of the polysaccharide for *A. senegal* and *A. seyal* gum. *A. senegal* is suggested to contain entirely of Type 1 repeat units, whereas *A. seyal* consists of small blocks of two or three modified Type 1 repeat units separated by significant blocks of Type 2 repeat units (Flindt et al., 2005). Recently (Nie, Wang, Cui, Wang, Xie & Phillips, 2013) elucidated the fine structure of *Acacia seyal* var. *seyal* and reported the presence of 13.6% galacturonic acid, not previously identified.

Studies have revealed the presence of three major components in gum arabic (*A. Senegal*): a high molecular weight arabinogalactan-protein (AGP) gum, an arabinogalactan (AG) and a glycoprotein (GP), accounting for in the region of 10%, in the region of 90% and in the region of 1% of the total gum, respectively (Randall et al., Food Hydrocolloids, 1988, 2, 131; Randall et al., Food Hydrocolloids, 1989, 3, 65).

The different components are responsible for different functionalities of gum arabic. For example, the arabinogalactan-protein (AGP) component, in *acacia senegal,* has been identified as an active emulsifier component, providing interfacial activity and stability during emulsification (Williams & Phillips, Handbook of Hydrocolloids, 2000, 155).

Underwood and Cheetham (Underwood & Cheetham, 1994) reported the fractionation of *A. seyal* using the same condition applied for acacia Senegal (Underwood et al., Journal of the Science of Food and Agriculture, 1994, 66, 217). As for the fraction of *A. seyal* that corresponded to AGP of *A. Senegal,* there was only 2.4% of the total, and the protein content was also lower than that of *A. senegal.* Molecular weight fractions with differing emulsification properties were identified for gum talha (*A. seyal*) (Underwood & Cheetham, 1994). The three main components designated arabinogalactan protein (AGP), arabinogalactan (AG) and glycoprotein (GP) known to be present in *Acacia senegal* are also present in *Acacia seyal.* Subsequently, Siddig *et al.* reported that the protein in *A. seyal* is not mainly located in the high molecular weight component (AGP) as for *A. senegal* and indicated that at least two components are present in the high molecular weight fraction in *A. seyal* (Siddig *et al.,* 2005). Flindt *et al.* have reported about the fractions which were adsorbed on to oil droplets of *A. seyal* emulsions and showed that they were less efficient than *Acacia senegal* (Flindt, Al-Assaf, Phillips & Williams, 2005). For *A. senegal* it was mainly the proteinaceous material of the high molecular weight peak (AGP) which is adsorbed on to oil droplets. On the other hand, *A. seyal* showed a different behaviour. The high molecular weight peak of *A. seyal* is hardly adsorbed, and the proteinaceous material belonging to the second peak is mainly adsorbed. It is thought that the difference of this adsorbed component is related to the difference of the emulsion ability of *A. senegal* and *A. seyal.*

*Senegal* type gives high levels of functionality in formation and stability of emulsions and micro-encapsulation of flavours, and plays a very important role in the food and beverage industries. According to Coppen (1995) "Gum talha from Sudan (the local name for *A. seyal*) is intrinsically a poorer quality gum than hashab (the local name for *A. senegal*) - it has inferior emulsifying properties and even light-coloured samples of whole gum sometimes forms dark solutions in water due to the presence of tannins and other impurities. It is more friable than hashab". *Acacia seyal* does not offer good emulsification performance, and is consumed directly as a confectionary in India and used in coatings, adhesives etc in other markets. The general consensus is that the emulsification ability of *A. seyal* is inferior compared with that of *A. senegal* (Fauconnier et al., 2000).

*Acacia seyal* showed considerably less surface activity compared to *acacia senegal* both at air/liquid and liquid/liquid interface (Elmanan, Al-Assaf, Phillips & Williams, 2008). *Acacia seyal* was found to be more resistant to enzymatic degradation, since only ∼40% of the high molecular weight fraction can be digested again indicating the presence of two components. However, there is a conflicting report which showed that *A. seyal* sample that have the less protein content gave better emulsion stability than some *A. senegal* samples (Buffo et al., 2001). It should be noted, that although *A. senegal* is considered to be good emulsifier for oil in water emulsion but performance from various samples collected from different areas show considerable variation. Some of which can be considered as poor as the widely acknowledged emulsification performance of *A. seyal* (Al-Assaf et al., 2008).

It has been shown that A. seyal gums have larger variation especially commercial samples from different locations (Jurasek et al., 1995, Al-Assaf et al., 2005).

The industry problems associated with the use of gum Arabic in general is that it has inconsistent performance and functionality. The inconsistency is partially due at least to the variation in the proportion of the three major components. Additionally, due to its variable sourcing from countries across the Sahelian belt of Africa, with different rainfall, soils and overall geography, the product has considerable inconsistency due to the natural variability. As a result, the raw material as delivered from primary producers often does not behave consistently in the various applications, (Williams, P.A. and Phillips, G.O.,(2000) in Handbook of Hydrocolloids, Editors Williams, P.A. and Phillips, G.O pp155-168, Woodhead, London and New York). Various approaches, therefore, have been used to try and eliminate the inconsistency as listed below.

There have been several modification procedures to improve the emulsification performance of gum Arabic in general and specifically *acacia seyal* in some examples as given below.

In US 6,841,644 (Phillips et al.) and US/GB 7,462,710 B2 (Al-Assaf) there are disclosed modification methods by radiation and heat treatment respectively to obtain gum arabic with one or more improved functionalities whereby the molecular weight and AGP content of the modified gum arabic were increased. In addition, it is known that excessive modification brings about negative effects including reduced solubility in water and degradation of the gum arabic.

EP-A-1 505 078 is directed to a process for modifying gum arabic by means of heating the gum arabic at a temperature higher than 40°C in humid conditions, which enhances its emulsifying ability.

Similarly, EP-A-1 666 502 discloses a heat treatment of gum arabic, albeit under dry conditions, leading to an improvement of its emulsifying ability.

EP-A-1 734 056 relates to a process for the modification of gum arabic by dissolving gum arabic in water and then heat-treating the solution at a temperature below 60°C, thus improving its emulsification properties.

US-A-2005/124805 also discloses modified gum arabic (from *Acacia Senegal* or *Acacia seyal*), which has improved emulsifying ability. The modified gum arabic is obtained by heating the gum arabic, in the solid state, at 110°C for not less than 10 hours.

The most relevant patents, which report the modification of *acacia seyal,* to this invention, are:
JP 2008-297359 (A) which describes the removal of tannin from gum arabic (Talha gum) solution originating from *Acacia seyal,* using a processing method that does not use hydrogen peroxide. The process relies on dissolving (Talha gum) originating from *Acacia seyal* in water from which dissolved oxygen has been removed. This aqueous solution is then processed with a synthetic adsorbent to absorb and remove tannin. In this way, tannin-free talha gum usable in food applications is obtained.

WO 02/069981 A1 describes a chemical process based on the reaction product of a hydrocolloid (such as *Acacia seyal*) with dicarboxlyic anhydrides specifically for the production of an emulsifier for oil-in-water emulsions.

WO 2013/091799 A1 describes a method for preparing modified gum arabic comprising treating gum arabic with an enzyme selected from the group of glycosidases at a concentration of 1 to 1000 units of enzyme per gram of gum arabic, a modified gum arabic obtainable by said method, an emulsion comprising the modified gum arabic and a beverage concentrate and ready-to-drink beverage comprising the emulsion.

In all above-mentioned patents, a physical or chemical treatment of gum arabic is used for achieving remarkably higher emulsifying abilities, expressed in the form of smaller oil droplet diameters in gum arabic stabilized oil-in-water emulsions.

### Summary of the invention

The present invention is set out in accordance with the appended claims.

It is one object of the invention to provide methods to prepare preparations of arabic gum from *acacia seyal* preferably preparations having improved properties.

This object is solved in one embodiment by a method for preparing an improved gum arabic comprising the steps of
- providing a gum arabic from *acacia seyal*
- selecting gum arabic having a tannin content > 700 ppm (w/w).

It was realized that the properties of gum arabic from acacia seyal depend on the tannin content. The measurement of tannin is performed according to the method described in the examples.

Any gum ararbic from acacia seyal may be used, preferably one may use gum arabic of acacia seyal var., acacia seyal var. fistula and mixtures thereof. Preferably, the tannin content is >750 ppm (w/w) or > 1000 ppm (w/w) or > 2000 ppm (w/w).

A further embodiment of the invention is composition of gum arabic from *acacia seyal* having a tannin content > 700 ppm (w/w). Preferably, the tannin content is >750 ppm (w/w) or > 1000 ppm (w/w) or > 2000 ppm (w/w).

The tannin content is measured according to the examples. As an alternative, selection may be made for gum arabic from *acacia seyal* colour Gardner at 1% of 2.5 or greater, measured according to the examples.

Therefore, an embodiment of the invention is the method, wherein the gum has
i) a colour Garnder index of at least 2.5, more preferably 2.5-3.0 and even more preferably > 3 at 1 wt% in water or
ii) a colour Garnder index of at least 15, more preferably 15-16 and even more preferably > 16 at 20 wt% in water.

A further embodiment of the invention is a method for preparing an improved gum arabic comprising the steps of
- providing a gum arabic from acacia seyal
- selecting gum arabic, wherein the gum has
   i) a colour Garnder index of at least 2.5, more preferably 2.5-3.0 and even more preferably > 3 at 1 wt% in water or
   ii) a colour Garnder index of at least 15, more preferably 15-16 and even more preferably > 16 at 20 wt% in water.

It was further found, that gum arabic may be improved by increasing the content of phenols. Therefore, a further embodiment of the invention is a process for improving gum arabic comprising the steps of
- providing gum arabic
- preparing a dispersion of gum arabic
- adding a phenol source.

This process is applicable to gum arabic of *acacia seyal,* gum arabic of *acacia senegal,* or a mixture thereof. Any *acacia senegal* variety may be used, preferably *A. senegal* (L.) Willd var. *senegal* (syn. A. verek Guill. & Perry); *A. senegal* (L.) Willd var. kerensis Schweinf; *A. senegal* (L.) Willd var. rostata Brenan; and *A. senegal* (L.) Willd var. leiorhachis Brenan (syn. A. circummarginata Chiov.). The process is also applicable to other gum varieties such as *acacia polyyacantha* var *campylacantha, acacia sieberana var. sieberana, acacia Nilotica, acacia mellifere and Acacia laeta.*

In a simple process, bark may be prepared in powder form, combined with water and incubated. Incubation may be at elevated temperatures, e.g. between 20 and 80°C. It is possible to add the gum arabic after incubation or combine it with the water phase during incubation.

As a phenol source bark, polyphenols and gallic acid are especially preferred. The bark should preferably contain polyphenols. Bark from *acacia seyal* is a preferred bark. Other preferred phenol sources are those obtained from other acacia gums varieties such as *acacia nilotica, acacia tortilis* as well as polyphenol extracts from olive and olive leaves.

In general, an addition of small amounts of a phenol source is sufficient. A preferred ratio (w/w) of gum arabic: phenol source is 100:1 to 100:5.

The product of the method is a further embodiment of the invention, i.e. a composition comprising
- gum arabic
- a phenol source.

This process is applicable to gum arabic of *acacia seyal,* gum arabic of *acacia senegal,* or a mixture thereof.

As a phenol source bark, polyphenols and gallic acid are especially preferred. The bark should preferably contain polyphenols. Bark from *acacia seyal* is a preferred bark.

It has further been found, that the properties of gum arabic of *acacia seyal* may be improved by adding gum arabic of acacia senegal.

Therefore, an embodiment of the invention is a method for improving gum arabic of *acacia senegal* comprising the step of:
- adding gum arabic of *acacia seyal*
- adding gum arabic of *acacia senegal.*

A further embodiment is a composition comprising
- gum arabic of *acacia seyal*
- gum arabic of *acacia senegal.*

The ratio of the amount of gum arabic of *acacia seyal* to the amount of gum arabic of *acacia senegal* may 5:95 to 95:5 (w/w). A preferred ratio is 20:80 to 80:20 (w/w) or 40:60 to 60:40 (w/w). A very preferred ratio is 50:50 (w/w).

Any of the compositions of the present invention may be used especially for making emulsion.

Therefore a further embodiment of the invention is an emulsion comprising water, a hydrophobic compound and a composition of the invention. Preferably, the emulsion is an O/W or W/O/W emulsion which contains at least one hydrophobic substance.

Suitable hydrophobic compounds are vegetable oils, middle chain triglyceride (MCT) oils, and mixtures thereof. Further examples of hydrophobic substances include essential oil obtained from pant sources such as orange, lemon, lime, grapefruit; oleoresin obtained from plant sources such as pepper, cinnamon and ginger by the oleoresin process; oil based flavouring such as oil-based synthetic flavouring compounds and oil-based flavouring compositions, oil based colourants such as b-carotene, oil-soluble vitamins such as vitamins A, D, E and K; polyunsaturated fatty acids such as docosahexaenoic acid, eicosapentaenoic acid and linolenic acid; animal and vegetable fats and oils such as soybean oil, rapeseed oil, corn oil, plant sterol and fish oil; SAIB (sucrose acetate isobutyrate), ester gum (glycerol triabietate ester); processed food oils such as C₆-C₁₂ medium chain triglycerides and mixtures of any such edible oil materials.

The emulsions may be part of a food or a beverage, for examples soft drinks. Therefore, a further embodiment of the invention is a beverage or food comprising the emulsion of the invention. It can be also used in many fields including confectionary, health food, coating for tablets, gum jelly, emulsified falvours and paints.

The present invention will now be described in further details with reference to the following examples and Figures. These examples are intended only to further illustrate the invention and are not intended to limit the scope of the invention as defined by the claims.

### Brief description of the figures

Figure 1 shows an elution profile of *Acacia seyal* (sample No 5) monitored by (a) light scattering (detector 90⁰), (b) refractive index and (c) UV at 214nm as described in Example 1. The results were processed for the whole gum and according to two peaks as identified on the refractive index detector (Figure 1b).
Figure 2 shows droplets size distribution of emulsion made using sample No.5 according to example 1. Made at 20% gum:20% MCT. The emulsion was subjected to stress acceleration for 3 and 7 days at 60°C.
Figure 3 shows volume weighted mean (D4,3) and tannin content for a range of *Acacia seyal* (Talha gum) samples used to make 20% gum:20% MCT oil in water emulsion according to example 1.
Figure 4 shows initial % droplets and after acceleration at 60°C for emulsions made using a range of *Acacia seyal* (Talha gum) samples used to make 20% gum:20% MCT oil in water emulsion according to example 1. Colour Gardner measured at 1 wt% in water is also given in the graph.
Figure 5 shows initial D4,3 and % droplets and after acceleration for at 60°C for emulsions made using a range of *Acacia seyal* (Talha gum) samples used to make 20% gum:20% MCT oil in water emulsion according to example 1. Colour Gardner measured at 1 wt% in water is also given in the graph.
Figure 6 shows an elution profile of *Acacia seyal* (Sample No. 18) monitored by refractive index detector in the presence and absence of added tannin (generated from *Acacia seyal* bark) as described in Example 2.
Figure 7 shows volume weighted mean diameter and % droplet greater than 1 micron for emulsion made using control *acacia seyal* samples and following the addition of bark according to example 2. Measurements also reported for emulsion subjected to stress test acceleration by incubating the emulsion at 60°C for 3 and 7 days.
Figure 8 shows Elution profiles of bleached *acacia seyal* before and after the addition of *acacia seyal* bark according to example 3 monitored by (a) refractive index, (b) Light scattering detector (90⁰) and (c) UV at 280 nm.
Figure 9 shows volume weighted mean (D4,3) and % droplets greater than 1 and 2 microns for fresh and accelerated emulsions made using bleached *acacia seyal* before and after the addition acacia bark according to example 3.
Figure 10 shows droplet size distribution of oil in water emulsion made using *acacia Senegal* (No.1) for fresh and accelerated emulsions (3 and 7 days at 60°C) made using (a) control sample, (b) with added *acacia seyal* bark and (c) after the addition of gallic acid according to example 4.
Figure 11 shows comparison of Light scattering (detector 90⁰) response for *A*. *senegal* with gallic acid addition and bark addition according to example 4.
Figure 12 a and b show volume weighted mean (D4,3) and % droplets greater than 1 and 2 microns for fresh and accelerated emulsions made using spray dried *acacia Senegal (sample Nos.2 and 3)* before and after the addition acacia *seyal* bark according to example 4.
Figure 13 shows volume weighted mean (D4,3) and % droplets greater than 1 micron for fresh and accelerated emulsions (3 and 7 days at 60°C) made using *acacia Senegal (sample No.4) and acacia seyal and mixes made at 50:50%* from *senegal* and *seyal* according to example 5.
Figure 14 shows droplet size distribution of fresh and stored emulsion made using *Acacia seyal* (Sample No. 23) at 12 wt%).
Figure 15 shows droplet size distribution of fresh and stored emulsion made using 15 wt% *Acacia seyal* (Sample No. 23) and 5 wt% *Acacia senegal* ((Sample No. 5).
Figure 16 provides colour Garnder measurements for the samples of the present invention; figure 16a refers to 1% and figure 16b to 20% by weight.

### Examples

### Samples and test methods

Authenticated samples of *acacia seyal* (gum talha) obtained as a mixture of small nodules and broken gum pieces with varying colour were obtained from various locations in Sudan, from two seasons. In total 23 samples were used. *Acacia Senegal* samples, in the lump gum form with various sizes, were also obtained from Sudan from various suppliers. Additionally, spray dried *acacia senegal* were also used and were obtained from Norevo (Germany). Spray dried *acacia seyal* subjected to bleaching by hydrogen peroxide was obtained from Dansa Food (Nigeria). The spray dried gums were used as supplied. The crude gum samples were kibbled using pestle and mortar in order to prepare a homogenous sample (in powder form) which was then used for all measurements listed below:
The practical problem is that acacia seyal from various producing countries is supplied with different colour and thus properties. The main reason for this variation is believed due to (i) the varieties of this species, i.e. Acacia seyal var seyal and Acacia seyal var. Fistula. In a recent paper (Andres Brull 2015) it was shown how these varieties can be different even when they come from the same area and season. Variety fistula has a powdery bark, normally white or greenish-yellow, whereas var. seyal has a reddish bark. In the above paper it was stated "Why seyal obtained from various production areas shows such variation in terms of colour and shape is still not well understood. Currently, all A. seyal which originates from Sudan is sold as "seyal" (locally known as talha gum) irrespective of its taxonomic variety." Additionally, the other reason why acacia seyal is different and has not been possible to use in the industry is that different production areas within the same producing country use different methods for pre and post harvest treatments. One area tap acacia tree as it is the normal procedure used for Acacia senegal whereas other areas simply collect the natural exudate without tapping. For this reason nodules with various colour are often the result since tannin is actually a containment which comes from the bark of *acacia seyal* tree. It has already been known that when the tree is tapped the gum is lighter in colour since tapping essentially means manually wounding tree by removing the bark to induce gummosis.

Loss on drying: The % loss on drying was determined according to the JECFA method which is a measure of the moisture loss when the sample is heated for 5 hrs at 105°C *(Al-Assaf, S., et al.2005);*
*see* www.cybercolloids.net/library/jecfa/gum-arabic.

Optical Rotation: The optical rotation was measured on 1 wt% solution (based on dry weight) prepared in distilled water and hydrated over night by tumble mixing. The solution was then filtered through 100 micron mesh.

Colour Gardner: The same solution was also used to determine the colour Gardner index as follows: A calibrated Lovibond Tintometer PFXi - 195/1 colorimeter was used to determine colour Gardner of the *acacia seyal* samples. Measurements were carried out using 10mm path length cell on 1 wt% solutions prepared as described above. The Gardner colour scale is from 1 to 18 with 1 containing the least amount of colour and 18 with the maximum amount of colour. The Gardner is a one dimensional scale used to grade liquids such as varnishes, resins and oils.

Total Phenols: Total phenols were determined using the modified Prussian Blue Assay as described in details in Andres-Brull 2015 and given below.

Tannin content is taken here to represents the "total phenols" and more accurately the "gallic acid equivalents" as gallic acid - 99% in purity purchased from Sigma Aldrich - was used as the analytical standard for determining the hydrolysable tannins. 1 wt% solution was made according to the method described above was used to determine the tannin content in the respective samples.

500 µg/g gallic acid was prepared in distilled water. This was then serial diluted to obtain concentrations of 400, 300, 200, 100 and 50 µg/g used as standards. 0.10 mL of each sample or the standard was dispensed in a 30ml universal. 3 mL of distilled water was added following by vortex mixing. Next, 1.00 mL of 0.016 M K₃Fe(CN)₆ followed by 1.00 mL of 0.02M FeCl₃ were added and immediately mixed by vortex mixer. Exactly 15 minutes after adding the reagent to the sample 5.00 mL of stabiliser was added and vortex mixed. The stabiliser was prepared by mixing 10 mL of 85% H₃PO₄, 10mL of 1 wt% gum arabic and 30ml of distilled water. The gum arabic sample used was standard *acacia senegal var. senegal* in the kibbled form obtained from Sudan. Solvent only blanks were also prepared by adding all reagents and 0.1mL of solvent instead of seyal or gallic acid standards. The Absorbance was read at 700nm in duplicate for all using Perkin Elmer Lambda 40 UV/Vis spectrophotometer. The error in measuring the tannin content was below 10% for all samples and the average was taken.

Molecular weight: The molecular weight parameters of gum arabic were determined by gel permeation chromatography coupled on line to laser light scattering, refractive index and UV detectors (GPC-MALLS). The use of a GPC-MALLS system first fractionates the material using gel permeation chromatography column (Superose 6 10/300GL), and then subsequently detects each fraction using: a protein detector (UV absorbance using Agilent 1100 series UV detector, Agilent Technologies, U.K.) operated at 214 nm or 280nm), a multiangle laser light scattering detector (measured using DAWN EOS multiangle light scattering detector, Wyatt Technology Corporation, U.K., operated at 690 nm), and a concentration detector (refractive index, RI measured using Optilab refractometer, Wyatt Technology Corporation, U.K.). Aqueous NaCl solution (0.2 M) with 0.005% NaN₃ filtered through 0.2µm Millipore filter was adopted as an eluent and was delivered at a constant rate of 0.4 mL/min by a KNAUER HPLC pump K-501 (Kinesis, U.K.). The test material was prepared in the same solvent at a concentration of 2 mg/mL. It was injected into the GPC-MALLS system after being filtered through a 0.45 µm Nylon filter. Data was collected and analyzed by Astra 4.90.08 software. The system allows the molecular weight distribution of gum arabic to be measured and thus the molecular weight of whole gum as well as individual fractions can be determined together with its proportion compared to the total injected mass.

Emulsification: The emulsification performance of the various *acacia seyal* samples as well as *acacia senegal* and mixes thereof were evaluated in a typical oil-in-water emulsion as described below. The method utilised medium chain triglycerides as the oil phase without using a weighting agent. Typical formulations were prepared as follows: 40 gm emulsions were made to contain 0.12 wt% citric acid (to adjust the pH), 0.13 wt% benzoic acid (as a preservative), Medium-chain triglyceride (MCT) oil was used as model oil at 20 wt% and gum arabic at 20 wt%. Gum Arabic mixes (*seyal and senegal, kerensis, polyacantha* etc) were made by mixing the solid gum which was used to make the stock solution at 30 wt% and from which dilution to 20 wt% was achieved using distilled water. Ingredients were initially mixed using a high shear homogeniser (Polytron PT-2100) at 26000 rpm for 3 minutes followed by two passes through a high-pressure homogeniser at 50MPa (Nanovater, NV L, Yoshida, Japan). The emulsion droplet size and size distribution were measured using laser diffraction methods (Mastersizer, Malvern Instruments, UK) by fitting the data using the general purpose model. Values of 1.45 and 0.001 were used for MCT refractive index and absorption index respectively, and 1.33 and 0 for the dispersant (water) respectively. The emulsions were subjected to an accelerated stress testing by incubation at 60°C. The performance and stability of the emulsion were evaluated by measuring the initial droplet size immediately after preparing the emulsions and after storing them at ambient temperature and also at 60°C (accelerated stress test) for 3 and 7 days. The results were expressed as volume-moment mean diameter (D4,3) since it is more sensitive to large particles. Additionally, the % of droplets greater than 1 µm or 2 µm or more were also reported since larger proportions of these droplets are mainly responsible for the development of ring formation which ultimately leads to emulsion failure.

### Example 1: An oil in water emulsion made using Acacia seyal only

*Acacia seyal* Sample (No. 5) was chosen to illustrate the example of making an oil in water emulsion with excellent emulsification and stability performance. The results are comparable to *Acacia senegal* and in some cases even better. The sample characteristics measured as outline above as follows:
% loss on drying 11.25%,
tannin (gallic acid equivalent) content 942ppm,
Colour Gardner at 1% 3.3,
Colour Gardner at 20% 16.2,
pH 4.74 (measured at 20 wt% in water) and
Optical rotation of +50.

The molecular weight parameters measured by GPC-MALLS, the characteristics of which have been reported previously (Elmanan et al., 2008; Hassan et al., 2005) and summarized below.

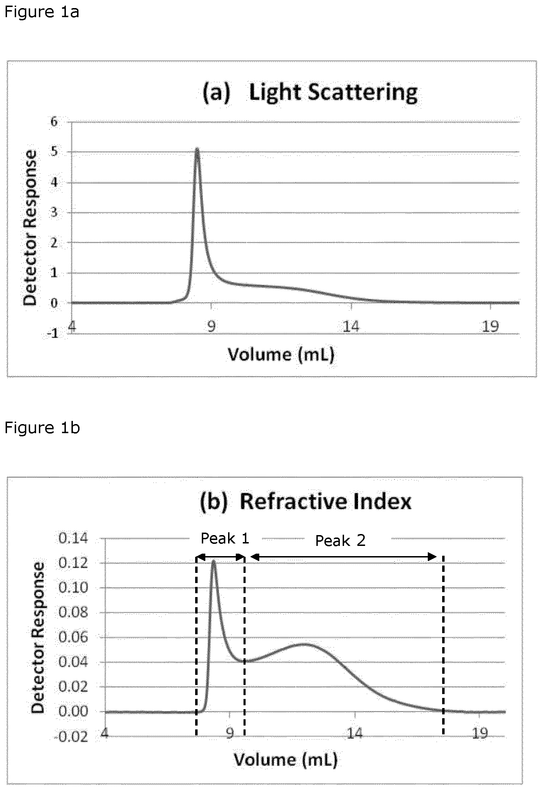

The elution profile monitored by light scattering, refractive index and UV detectors is given respectively in Figure 1a-c. Two peaks can be identified by the light scattering detector (Figure 1a). The first peak is not digested by protease, unlike *Acacia Senegal* and therefore not called the arabinogalactan fraction (AGP). Previous studies have shown that this peak is made up of two components, only one of which is digested by protease enzyme (Elmanan et al, 2008).

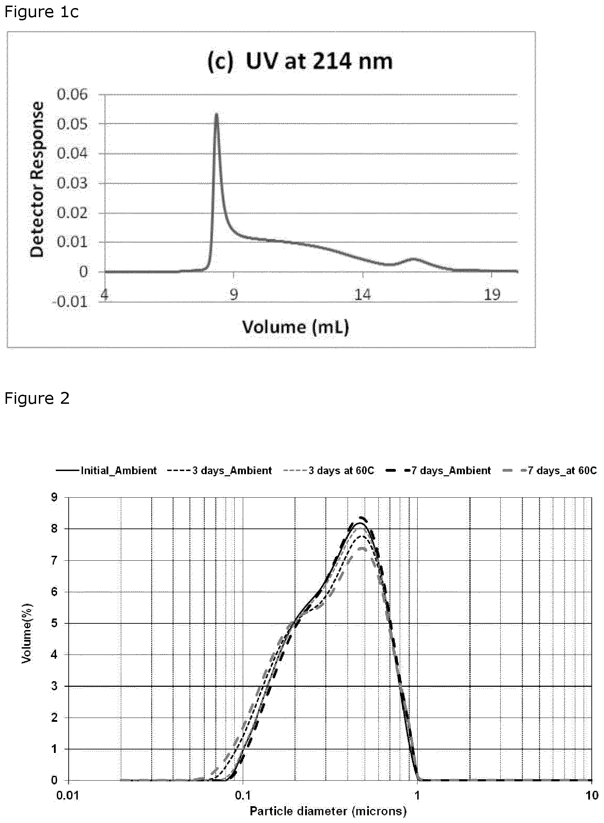

The refractive index detector (measure of concentration) also shows two peaks (Figure 1b). The first peak corresponds to the high molecular weight fraction while the second corresponds to the arabinogalactan (AG) and glycoprotein (GP) fractions. The UV response (Figure 1c) shows three peaks similar to that for *Acacia senegal* but with lower intensity and in agreement with the lower protein content present in *Acacia seyal* (Elmanan et al, 2008). The weight average molecular weight of the whole gum determined by the processing the data from the start of the elution (∼7.6 mL) to the end (∼17.8mL) is 8.44 x 10⁵ g/mol. Each peak was also processed separately by integrating the area under the RI peak. Peak 1 corresponds to the high molecular weight fraction and was identified from the RI detector response while peak 2 represents the arabinogalactan (AG) unit and glycoprotein peak (GP). The weight average molecular weight and the proportion of peak 1 and 2 are (peak 1: Mw 1.68 x 10⁶, % mass 28.5%) and (peak 2, Mw 5.09 x 10⁵, % mass 71.5) respectively.

The sample was used to prepare the emulsion as described above. Figure 2 shows the droplet size distribution for the fresh emulsion. Subsequently, the emulsion was heated (at 60°C for 3 and 7 days) as a stress acceleration test, and the droplet size distribution was measured again and compared to those stored at ambient temperature for the same period. Comparison with the initial droplet size distribution is also shown in Figure 2. The results clearly show an excellent initial emulsification performance whereby all droplets are below 1 micron. Storage at room temperature for 3 and 7 days did not result in any further significant changes in droplets sizes. Furthermore, upon acceleration testing there is very little change in the size distribution even after 7 days. D4,3 initial 0.406 µm, 3day at 60°C 0.411 µm, 7 days at 60C 0.393 µm. % droplet > 1 micron initial 0.07%, 3d 0.148%, 7 days 0.146%. % droplet greater than 2 micron is zero before and after acceleration. The results shown in Figure 2 matches those obtained from good quality *acacia senegal* when the subjected to the same processing conditions to prepare oil in water emulsion. The results shown in Figure 2 are novel and have not been reported previously for natural *acacia seyal* without any further treatment such as chemical or enzymatic modification. As mentioned and detailed in the background *Acacia seyal* is widely acknowledged to possess inferior emulsification performance compared to the standard *Acacia senegal* used in the industry for emulsification requiring long term stability. It should be noted, however, that *acacia seyal* can make good initial emulsion as we have shown in Figure 1 and is typically used for encapsulation or applications that do not require long term emulsion stability. The novelty of this example is that long term stability for oil in water emulsion can be obtained from *acacia seyal* in its natural form without any additional treatment. In the following section the main difference between *acacia senegal* and *seyal* emulsification performance and stability is highlighted. Specifically, the role of tannin present in acacia seyal and its role in the emulsification performance and stability.

The AGP component of gum arabic (*Acacia Senegal*) is responsible for the emulsification effectiveness of oil in water emulsions (Randall et al., Food Hydrocolloids, 1988, 2, 131; Randall et al., Food Hydrocolloids, 1989, 3, 65); (Dickinson, E. (2003)). The AGP is believed to coat the oil droplets and prevents them from re-associating. As a result, such an emulsion is stable over a long time scale. Higher AGP content usually leads to even more stable emulsions and therefore makes a gum more valuable. High AGP content is also considered to be associated with other functionalities such as water binding and flavour binding. Increasing the amount of the AGP component in a gum alone provides added value to gum arabic product. *Acacia seyal* on the other hand, can form good emulsion initially but the stability of the emulsion has always been the problem. Since the makeup of the first peak is different in *seyal* the stability of the emulsion usually deteriorate following acceleration. Without being bound to a particular theory this increase in stability is considered as a direct contribution of tannin. Specifically, the better stability is considered as a consequence of tannin contribution to the molecular association present in the first peak. Tannin is known to bind to protein and has also been reported to precipitate protein. Good and stable emulsion can be obtained as further demonstrated below on a range of samples of *acacia seyal.*

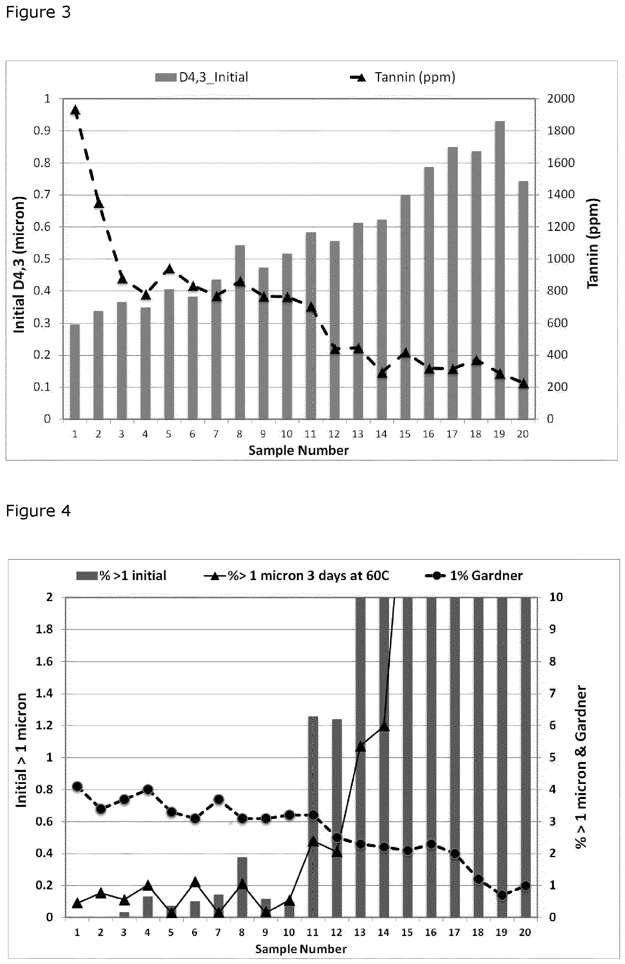

Figure 3 shows the initial volume weighted mean (D4,3) for emulsion made using various *Acacia seyal* with tannin content ranging from 227 to 1900ppm. The results give reasonable correlation with the initial droplet size and tannin content. Values as low as 0.3 micron and as high as 0.9 micron can be obtained depending on the tannin present. Samples with tannin content > 800ppm generally give droplet size of 0.4micron or below. At around 600-800ppm the droplet size in the range of 0.4 - 0.6 micron. At 400ppm or below the droplet size is in the range of 0.55 - 0.9micron. The initial emulsion performance is determined by the ability of molecules to adsorb onto the interface and lower the interfacial tension between oil and water. According to Dickinson, E. (2003) for a given molecule containing nitrogen (protein), such as acacia gums, two main molecular factors would be expected to influence the rate of lowering of the interfacial tension and consequently to promote an efficient emulsification process: these are (i) the molecular weight of the protein-polysaccharide complex and (ii) the accessibility of the protein component within the macromolecular complex. Low molecular weight fractions will diffuse quickly to the interface, leading to a rapid lowering of the tension which ultimately results in low droplet size. On the other hand, high molecular weight fractions will diffuse slowly and lower tension slowly. Once the acacia gum molecule has diffused to the interface it will become adsorbed if the protein moiety is accessible to the interface and not buried in the centre of the molecule. Following storage or acceleration there will be some rearrangements at the interface which results in changing the droplet size distribution resulting also from droplets coalescence.

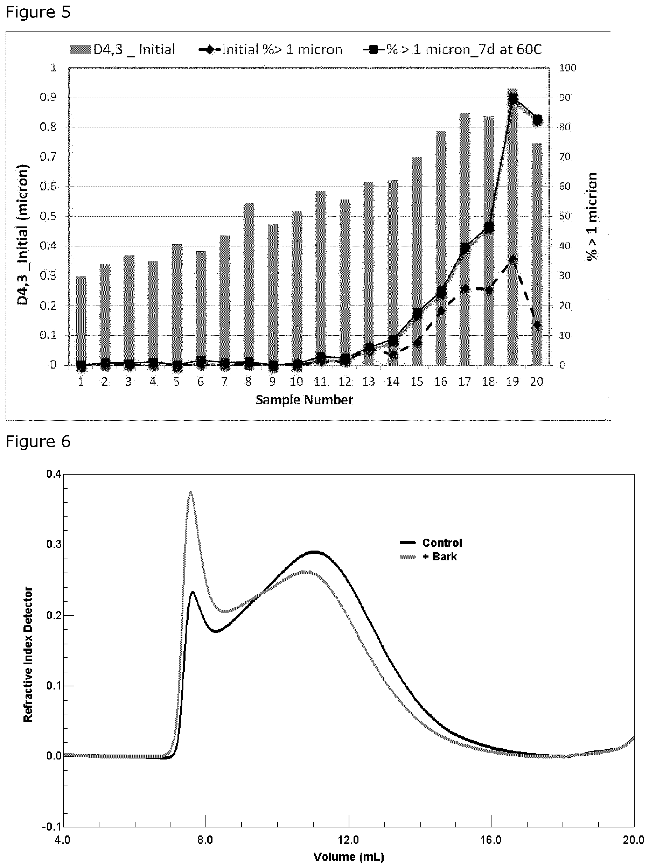

Figure 4 shows initial % droplets greater than 1 micron as well as after acceleration for 3 days at 60°C together with the colour Gardner for the 20 samples shown also in Figure 3. The colour Gardner correlates well with the tannin content since it is measure of colour scale attributed to the tannin present. Samples with Gardner colour of >3 is associated with low D4, 3 and % droplet > 1 micron of below 1% of the total volume. Upon acceleration for 3 days at 60°C the % droplet > 1 micron increases only slightly but remains below 1% of the total volume. On the other hand samples with Colour Gardner below 3 give higher proportion (equal or greater than 1%) and increase significantly when subjected to acceleration testing at 60°C for 3 and 7 days as shown in Figure 5. There are very slight changes in the emulsion stability for *acacia seyal* samples at 60°C compared to more significant change for samples with lower tannin content.

The results given in Figures 3-5 demonstrate that a selection of natural *acacia seyal* for oil in water emulsion is possible. The emulsion is similar or better than the standard materials (Acacia Senegal) typically used in the beverage and other related industries.

### Example 2: Addition of Acacia seyal bark to Acacia seyal gum

In this example, we have used three samples which gave poor emulsification performance and stability to demonstrate how tannin (more specifically hydrolysable tannin) can improve the molecular weight properties and emulsification.

These samples were No.18, No.19 and No.20 with tannin content of 373, 287 and 227 respectively. The samples were selected based on showing the least amount tannin in the 20 samples shown in Figures 3, 4 and 5 above. First, the method of obtaining and quantifying the tannin released from the bark was determined using the Prussian Blue Assay as described above. Bark (only) obtained from *Acacia seyal* tree was made into powder using an electric grinder. 5gm this powder was dispersed in 500ml of distilled water and heated for 3 hours at 60°C. The total phenol was determined and a value of 131 ±2 ppm (gallic acid equivalent) was obtained. The *acacia seyal* samples (with poor emulsification performance) were dissolved in water to make 30 wt% solution. To this solution 1gm of ground bark (as given above) was added to increase the total tannin content to 700, 614 and 554ppm for samples 18, 19 and 20 respectively.

(Note: This was calculated as follows: 1% of solid bark (i.e. dissolving 5gm in 500ml water) gives 131ppm of tannin. A seyal stock solution was prepared at 30 wt% in water to which 1gm of solid bark was added to the total volume 40gm. The concentration of bark is then ∼2.5%. Each 1% solid bark gives 131ppm tannin as shown above. Therefore
for sample 18 (131 x 2.5) + 273ppm (original tannin present = ∼700ppm total tannin in gum after adding the bark.
for sample 19 (131 x 2.5) + 273ppm (original tannin present = ∼614ppm total tannin in gum after adding the bark.

Sample 20 (131 x 2.5) + 227ppm (original tannin present = ∼554ppm total tannin in gum after adding the bark.

The mixture was heated for 3hrs at 60°C then left to tumble mix over night. The solution was then filtered using 100 micron mesh as described above. Dilution to 2mg/mL in 0.2M NaCl was made from the control and the sample with added tannin. The samples were then injected into the GPC-MALLS system and the molecular weight parameters are given in Table 1 below.

Alternatively, the same method was applied using another source of polyphenol: namely an extract from Olive leaf (N-O-02.02 Olexelo (solution), supplied by N-Zyme, Germany). The total polyphenol for this extract was determined according to the method described already and a value of 3042 ppm was obtained. 0.5ml of Olexelo was added to 3g of 17.6 wt% solution of Acacia seyal (Sample No. 23) and the solution was treated the same way by incubation at 60°C for 3 hours and subsequently diluted 2mg/mL in 0.2M NaCl for GPC-MALLS measurements. The results are also given in Table 1.

**Table 1. Molecular weight parameters, determined by GPC-MALLS, of Acacia seyal (sample No. 18, 19 and 20) in the presence of absence of added tannin.**

| Sample Number | 18 | 18+bark | 19 | 19+bark | 20 | 20+bark | 23 | 23+Olexelo |
|---|---|---|---|---|---|---|---|---|
| Mw -whole qum (x 10⁵) | 9.9 | 16.1 | 12.3 | 15.2 | 9.8 | 17.6 | 11.6 | 20.1 |
| Rg - (whole qum)/nm | 17 | 34 | 20 | 34 | 14 | 48 | 24 | 51 |

Upon the addition of tannin all samples showed an increase in the molecular weight and accompanied by an increase in the Rg value, albeit to a different extent. The results show that the increase in the molecular weight parameters is directly related to the formation of high molecular weight fraction. These changes are clearly shown in Figure 6 which compare the elution profile of sample No. 18 in the presence and absence of added tannin.

Without being bound to theory we attribute this change to simply association of gum arabic molecules throughout the distribution by tannin. The addition of tannin results in molecular association whereas almost all molecules are affected. Consequently, there is a clear increase in the first peak area and a reduction in the second peak (AG+GP fractions). It is interesting to note that in the total volume area (19-24mL) the response is almost identical for control and that of added tannin which confirms that the only the soluble tannin is released from the bark during dispersion in water.

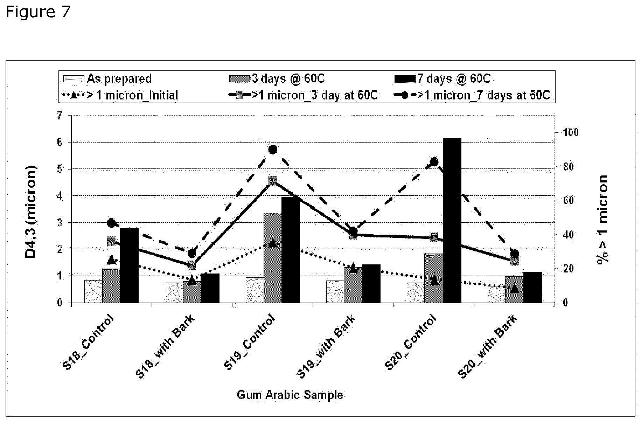

The emulsification performance of the samples in the presence and absence of added tannin is compared is Figure 7. Figure 7 shows the volume weight mean (D4,3) and % droplet greater than micron for emulsion made using control *Acacia seyal* samples (No.18, 19 and 20) and those with added bark. All samples showed an increase in the droplet size following stress test acceleration at 60°C for 3 and days. Following acceleration the droplet size of emulsions made using the control samples (i.e. without added bark) increased up to 3-6 times of its original size as a result of droplet coalescence. All samples with added bark showed improved initial emulsification performance whereby the D4,3 and % droplets greater than 1 micron were reduced. More significantly is the improved stability form all samples following acceleration at 60°C for 3 and 7 days. The proportion of droplets > 1 micron control samples (No. 18,19 and 20) after 7 days acceleration at 60°C was 47, 90 and 83% respectively and were reduced to 29, 42 and 28%, respectively, following the addition of the bark. The droplet size for control samples after 7 days were 2.77, 3.96 and 6.2 and were reduced to ∼1 micron in the presence of tannin.

### Example 3: Addition of Acacia seyal bark to bleached Acacia seyal

In this example we have selected *acacia seyal* sample which has been subjected to bleaching, using hydrogen peroxide, to further demonstrate the effect of adding bark as a source of soluble tannin to *Acacia seyal.* First the molecular weight parameters before and after the addition of bark were determined using GPC-MALLS techniques as described above and the results are shown in Table 2 below.

**Table 2. Molecular weight parameters of control bleached A. seyal in the spray dried form and with added bark.**

| Parameter | Control | Addition of bark |
|---|---|---|
| M_{w} whole qum (x 10⁵) g/mol | 5.3 | 10.0 |
| Rq (whole gum)/nm | 25 | 54 |
| M_{w} AGP (x 10⁶) g/mol | 1.9 | 5.5 |
| % mass (1st peak) | 11.0 | 11.9 |
| Rg-1^{st} peak / nm | 32 | 58 |
| M_{w} (AG+GP) (x10⁵) g/mol | 3.6 | 3.8 |
| % mass (AG+GP) | 89 | 88 |

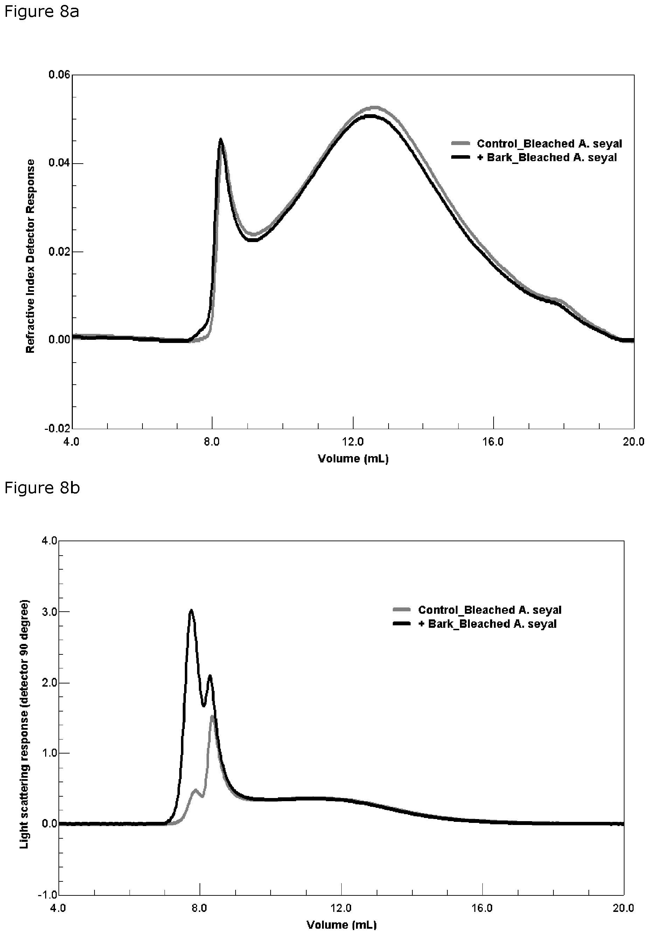

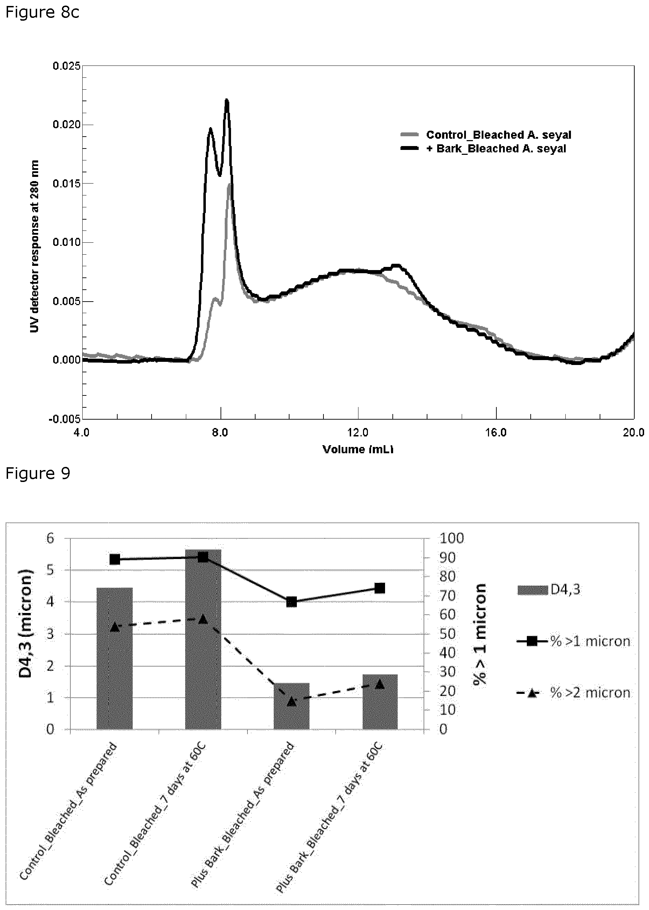

The results given in Table 2 show that the weight average molecular weight for the whole gum is almost doubled upon the addition of bark and accompanied by an increase in the Rg (root mean square radius of gyration) value from 25 to 54nm. While the proportion of the first peak is almost the same it is most significant to note the molecular weight increases from 1.9 x 10⁶ to 5.5 x 10⁶ g/mol and also an increase in its Rg value from 32 to 58nm. The parameters for the second peak (i.e. AG and GP fraction) remain largely unchanged with the exception of the slight increase in the molecular weight. These changes are clearly shown in the comparison of the elution profile monitored by refractive index, light scattering (detector 90⁰) and UV detectors for bleached *seyal* before and after the addition of bark as shown in Figure 8 a,b,c respectively. Figure 8a shows very similar refractive response albeit most noticeable difference can be identified the start of the elution volume (∼7.3mL) and at the peak height for the AG peak (∼13mL). However, the most significant difference is the appearance of large light scattering peak (∼7-8.5mL) which shows also large UV response at 280nm typically associated with phenolic materials. The results demonstrate that the soluble tannin is associated with the high molecular weight fraction and thus resulting in the increase of the molecular weight parameters given in Table 2 above.

Similarly, the emulsification performance of bleached *acacia seyal* before and after the addition of *acacia seyal* bark was evaluated. Emulsion at 20% gum:20% MCT oil prepared according to the standard method described above. The emulsions were then evaluated by measuring the droplet size distribution for fresh emulsion and after acceleration for 3 and 7 days at 60°C and shown in Figure 9. Figure 9 shows the volume weight mean (D4, 3) and % droplet greater than micron for emulsion made using bleached *Acacia seyal* sample before and after the addition of bark. All emulsions showed an increase in the droplet size following stress test acceleration at 60°C for 7 days. Following acceleration the droplet size of the emulsion made using the control sample (i.e. without added bark) increased from 4.46 µm to 5.64 µm as a result of droplet coalescence whereas the droplet > 1µm for both was ∼90%. On the other hand, the emulsion with added bark resulted in reducing the D4, 3 value to 1.45µm and only increased to 1.73 mm upon acceleration for 7 days at 60°C thus demonstrating significant enhancement of the emulsification performance and stability.

### Example 4: Addition of Acacia seyal bark or gallic acid to Acacia Senegal

In the previous examples we demonstrated how *acacia seyal* bark addition to *acacia seyal (gum talha)* as well as to bleached *acacia seyal* can enhance the emulsification performance and stability. The addition of bark is mainly as a source of soluble tannin (hydrolysable tannin) which is source of polyphenolic compounds. In this example we have used *Acacia Senegal* which is widely known not to contain tannin. Here, initially we repeated the same procedure applied on *acacia seyal* samples whereby 1gm of bark was added the solid material during the dissolution process. In the second part, we have used pure gallic acid (99%) obtained from Sigma as a source of a soluble phenolic compound. The purpose of using gallic acid is to demonstrate that under the conditions used, i.e. adding the bark to gum arabic, only the soluble tannin (polyphenol) is released into the aqueous solution which is responsible for the molecular association between gum arabic fractions. The gum sample selected in this example originated from Sudan and was supplied in the lump gum form (Acacia *Senegal,* sample No. 1). The sample was kibbled using pestle and mortar and subsequently was made into a fine powder. 0.04g of gallic acid was added to ∼13g of gum arabic and made up to 40g with distilled water. The final concentration of gum arabic (based on dry weight) was 30 wt% containing 1000ppm gallic acid. The solution was left to dissolve overnight by tumble mixing on a roller mixer. The control sample was prepared in similar way without the addition of gallic acid. After dissolution an appropriate weight of the respective solution was made up to 10g with GPC solvent (0.2M NaCl) for determination of molecular weight. Emulsions were prepared as per usual method at 20% gum arabic and 20% MCT containing 0.13% benzoic acid and 0.12 citric acid. Then high shear mixing using the polytron and subsequently two passes at 50MPa using the high pressure homogemiser. The weight average molecular weight for the whole gum and Rg values are given in Table 3 below for control and the sample added bark as well as with the addition of gallic acid.

**Table 3. Molecular weight parameters of acacia senegal (in the crude form, Senegal No.1) before and after the addition of bark or gallic acid.**

| Parameter | Control | plus bark | plus gallic acid | |
|---|---|---|---|---|
| | | | with aggregates | without aggregates |
| Mw whole qum (x 10⁵) | 4.0 | 11.3 | 17.7 | 10.4 |
| Rg (whole gum)/nm | 28 | 44 | 77 | 45 |

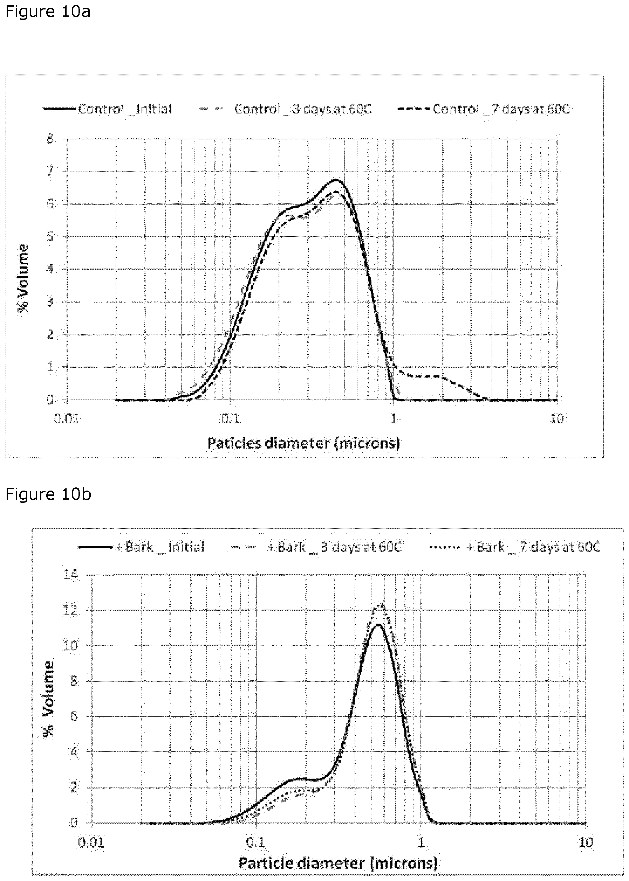

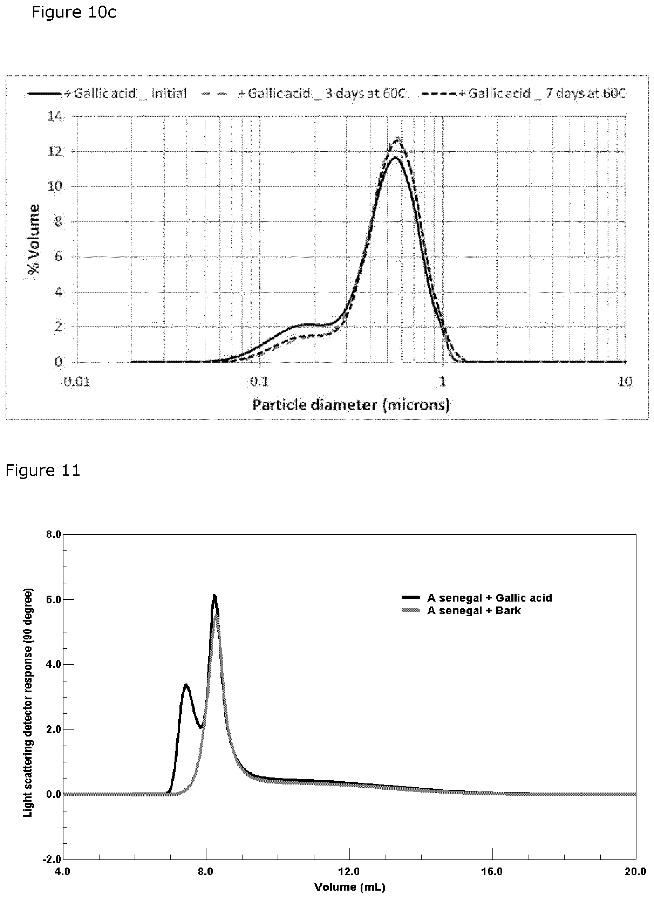

The results give average molecular weight for the control sample of 4.0 x 10⁵ g/mol with Rg value of 28nm. This value is considered slightly below average *A senegal* and indicates that is a fresh sample since the % loss on drying was 13.7%. Viscosity of 98 cps (measured using the Brookfield viscometer, 100 rpm, spindle 02) at 20% with pH value of 4.4 which are typical values of *acacia senegal* in the crude form. The elution profile monitored by light scattering, refractive index and UV detectors also showed typical *acacia Senegal* whereby the presence of three fractions: namely AGP, AG and GP can be identified. The emulsification performance was investigated and the droplet size distribution is shown in Figure 10a. The sample gave an excellent emulsification performance and stability up to 3 days acceleration at 60°C. However, further stress acceleration at 60°C for 7 days resulted in the formation of larger droplets as a result of emulsion breakdown due to droplets coalescence. The % of droplets greater than 1 micron increased from 0.11% to 7.23% after 7 days acceleration at 60°C. The emulsion grade for this sample is therefore categorized as an average as results of increase in the droplet size following acceleration at 60°C. The droplet size distribution of emulsion made using solution with added bark or gallic acid are shown in Figure 10b and 10c respectively. The droplet peak > 1 micron disappeared in both and therefore the emulsion is classed as an excellent emulsion since there is almost no change on the droplet size distribution following acceleration at 60°C for 3 and 7 days.

The improved emulsification is mainly due to increasing the molecular weight of the whole gum from 4 x 10⁵ at least by 2.5 folds compared to the starting material. The most striking changes is that following the addition of gallic acid an aggregate peak was formed at the start of the elution volume. The elution profile of the sample with added bark is almost identical to that with added gallic acid (Figure 11) with the exception of this aggregate peak. The proportion of this aggregate peak was only about 0.64% of the total mass but its apparent molecular weight was 11.64 x 10⁷ with Rg value of 108nm. The changes in the elution profile specifically at the start is associated with the high molecular weight molecules suggests that the addition of gallic acid is most prominent to associate these high molecular weight materials and produce this aggregate peak.

The results given in Figure 11 show the most important changes which is the increase in the molecular weight following the addition of bark or pure gallic acid. Addition of bark according to our calculation will results in adding 327ppm of tannin (i.e, released from 2.5% bark added to the gum solution) but with the addition of 1000ppm gallic acid the modification in the high molecular weight fraction is significant and results in the formation of an aggregate as shown clearly in the peak area (7-8mL). For acacia Senegal it is widely reported that the arabinogalactan peak made up of carbohydrate units (∼250-300K) are linked to common peptide to form what is called the wattle blossom structure as described above. The structure of the AGP is more open compared to the compact structure already demonstrated to be present in acacia seyal. As a result addition of gallic acid as a phenolic compound can easily access the free sites to interact with the protein. This interaction simply means bringing more AGP units together to form the supermolecules as shown in the aggregate peak with molecular weight of 11.64 x 10⁷ with Rg value of 108nm. Compare this to the typical molecular weight values for the AGP fraction is 1.5 - 3 million with Rg of around 35nm. Formation of this aggregate peak is typically associated with spray drying and we have attributed this behaviour to the heat treatment given to the gum solution during processing. Formation of aggregation in the spray dried material is typically associated with lower emulsification performance since the aggregates are too large to be useful in emulsification when the standard high pressure homogenisation is used, They typically need more high pressure homogenisation to disassociate and make useful to adsorb on to the oil droplet but generally samples with high proportion of aggregates are not good emulsifiers since there is some protein denaturation which results in more hydrophilic character being developed after spray drying.

Further to the example above we have also used other *Acacia Senegal* samples with poor emulsification performance. These samples were in the spray dried form and were obtained from various suppliers. The molecular weight parameters including the aggregate peak are tabulated in Table 4 below before and after the addition of bark. In both cases the molecular weight increases as a result of increasing the proportion of the high molecular weight fraction termed AGP. There is also an increase in the Rg value for both gum following the addition of bark. This increase again similar to what we found in *A seyal* and is accompanied by a decrease in the molecular weight of the second peak (AG+GP fractions). The reduction again attributed to the association of molecules following the addition of bark. Again, the addition of bark is purely as a source of soluble tannin which is released into the solution thus providing polyphenolic compounds required for the association process.

**Table 4. Molecular weight parameter of Acacia senegal in the spray dried form before and after the addition of acacia seyal bark as source of soluble tannin.**

| | Senegal No. 2 | Senegal No. 2 + bark | Senegal No. 3 | Senegal No. 3 + bark |
|---|---|---|---|---|
| Mw whole gum (x 10⁵) | 10.47 | 16.34 | 17.51 | 22.77 |
| Rq (whole gum)/nm | 68.6 | 75 | 66.9 | 81.9 |
| Mw AGP | 6.735 | 10.33 | 13.29 | 15.13 |
| % mass (AGP) | 9.53 | 12.33 | 10.41 | 12.72 |
| Rg-AGP | 72.8 | 83.9 | 69.5 | 87.9 |
| Mw (AG+GP) (x10⁵) | 4.478 | 4.114 | 4.112 | 4.03 |
| % mass (AG+GP) | 90.47 | 87.67 | 89.59 | 87.28 |

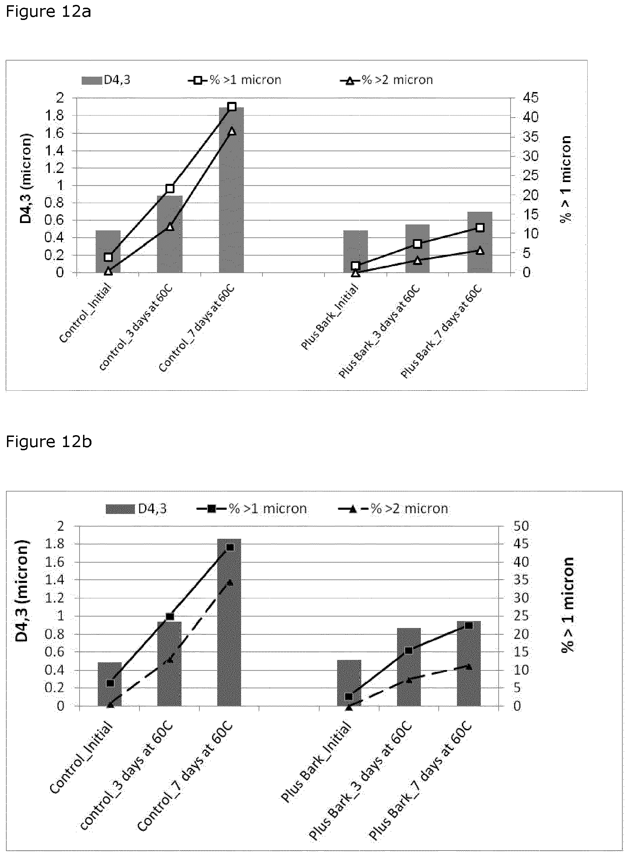

We have therefore also examined the effect of bark addition on the emulsification performance and stability. Both samples were chosen with poor emulsification properties as determined by the increase in D4,3 values and % greater than 1 micron droplets following acceleration at 60C for 3 and 7 days. Both samples give an initial smaller droplet of ∼0.48 micron with % greater than 1 micron of 3.9 and 6.4% respectively. Upon acceleration at 60°C for 7 days the proportion of droplets greater than 1 micron increases to > 40% (Figure 12). For this reason both samples are classed as poor grade emulsifiers. Addition of bark to these samples, similarly as seen with *Acacia seyal,* initially results in decreasing the droplet size and significantly improving the stability following acceleration at 60°C. The proportion of droplets greater than 1 micron following acceleration at 60°C for 7 days is reduced to 1.48% in the presence of tannin released from the added acacia bark. The increase in the stability is attributed to increasing the AGP proportion and formation of stable association through tannin provided by the bark addition.

### Example 5: Mixes of Acacia seyal with Acacia Senegal

An example is shown here to demonstrate that oil in water emulsion can be made by mixing *Acacia senegal* and *Acacia seyal. Acacia Senegal* (Senegal No. 4) obtained from Sudan in the lump gum form was processed by kibbling and subsequently made into powder using pestle and mortar. The *acacia senegal* sample was used to make mixes with three *Acacia seyal* samples (Samples No. 21, 22 and 23 also processed similarly into the powder form) at 50:50% in the dry state by mixing equal weight of each sample to give Mix 1, Mix 2 and Mix 3 respectively. The samples were then left to tumble mix to ensure a homogenous mixture. First the % loss on drying, optical rotation, pH and colour Gardner index were determined using the methods described above. Values for the % loss on drying for the mixes are almost an average of the sum of the two respective components. The optical rotation obtained for *acacia senegal* (-30) and *acacia seyal* samples are typical values and in agreement with those reported previously (Hassan et al, 2005).

Upon mixing *senegal* and *seyal* the optical rotation changes as a function of the sugar components present. Also the pH values for all samples and mixes are similar to those reported in previous studies and within the range of 4.1 - 4.8. The major difference between *Senegal* and *seyal* samples are the L* value (a measure of the solution transparency) and colour Gardner, measured at 1 and 20% solution in distilled water. The colour Gardner shows an increase with increasing concentration for both *senegal, seyal* and mixes samples. At higher concentrations the Gardner values enter the redder end of the scale (numbers 9-18). L* decreases with increasing concentration due to the increase in darkness of the solution. For *Acacia Senegal* at 1 wt% a value of 96 (almost fully transparent) is obtained compared to 80 at 20 wt%. On the other hand, for *acacia seyal* samples the value ∼40 at 20 wt% compared to ∼95 at 1 wt% solution. This difference between *Senegal* and seyal is mainly caused by the presence of tannin in *Seyal.* Mixing *Senegal* and *seyal* resulted in lighter colour and more transparent solutions for the three mixes. Repeated measurements on the same solution or fresh solution gave similar values with good reproducibility which indicates the mixture is fully compatible and no phase separation takes place.

**Table 5. % loss on drying, optical rotation, pH and colour measurements for solutions at 1 and 20 wt% solutions of Acacia Senegal and seyal together with the mixes made thereof.**

| **Sample** | **moisture content%** | ***Optical* rotation** | **Concentration** | ***Spectrocolorimeter*** | | **pH** |
|---|---|---|---|---|---|---|
| | | | | **L*** | **Gardner Index** | |
| **Senegal** | 14.1 | -30 | 20% | 80.05 | 2.9 | 4.31 |
| | | | 1% | 96.41 | 0.2 | 4.78 |
| **Seyal_No.21** | 8.1 | 50 | 20% | 43.84 | 14.2 | 4.59 |
| | | | 1% | 95.5 | 2.5 | 4.72 |
| **Seyal_No.22** | 10.2 | 52.5 | 20% | 46.22 | 14.1 | 4.56 |
| | | | 1% | 95.58 | 2.7 | 4.66 |
| **Seyal_No.23** | 8.8 | 62.5 | 20% | 40.42 | 15.6 | 4.54 |
| | | | 1% | 95.39 | 3.1 | 4.68 |
| **Mix 1 (Senegal and Seyal No.21)** | 11.6 | 10 | 20% | 51.42 | 12.5 | 4.12 |
| | | | 1% | 99.31 | 1.1 | 4.34 |
| **Mix 2 (Senegal and Seyal No.22)** | 12.0 | 17.5 | 20% | 53.55 | 13 | 4.19 |
| | | | 1% | 99.71 | 1.5 | 4.39 |
| **Mix 3 (Senegal and Seyal No. 23)** | 12.6 | 12.5 | 20% | 63.23 | 11.8 | 4.19 |
| | | | 1% | 100.61 | 0.8 | 4.40 |

Table 6 below gives the molecular weight parameters of *acacia Senegal* and *seyal* samples together with the mixes made thereof. The molecular weight of *acacia Senegal* for the whole gum is 5.5 x10⁵ and the proportion of the arabinogalactan protein fraction (AGP) at 10.85% with Mw of 2.1 x 10⁶ g/mol. These values are typical of standard gum Arabic in the crude form as reported previously (Al-Assaf et al, 2005).

The molecular weight parameters for *Acacia seyal* samples for the whole gum were 11.9, 10.6 and 11.6 x 10⁵ g/mol for samples 21, 22 and 23 respectively as shown in Table 6 below. The molecular weight for the 1^{st} peak were 3.6, 3.0 and 3.2 with a proportion of 15.2, 11.9 and 15.0 and Rg values from 26 - 37nm. The molecular weight for the second was ∼8 x 10⁵ g/mol. These are typical *acacia seyal* molecular weight parameters as reported previously (Hassan et al, 2005).

The molecular weight for mixes prepared at 50:50 weight percentage were also determined using the method applied for the control samples and the results shown in Table 6. *Acacia seyal* and *Senegal* mixes gave average molecular weight parameters in terms of the weight average molecular weight for the whole gum and for the second peak (typically associated with the arabinogalactan AG and glycoprotein GP fractions). There is a reduction in the proportion of the first peak area compared to both *Senegal* and *seyal* samples but comparable molecular weight to *acacia seyal* samples.

**Table 6. Molecular weight parameters for A. senegal and Acacia seyal and mixes thereof. Mw (whole) mean the molecular weight was determined for the three fractions present in the respective sample. Rg means the root mean square radius of gyration.**

| **Sample** | **Senegal** | **Seyal_No.21** | **Seyal_No.22** | **Seyal_No. 23** | **Mix 1** | **Mix 2** | **Mix 3** |
|---|---|---|---|---|---|---|---|
| **M_{w} whole gum (x 10⁵)** | 5.55 | 11.92 | 10.58 | 11.65 | 8.56 | 8.84 | 7.12 |
| **Rg (whole gum)/nm** | 20 | 26 | 21 | 24 | 33.60 | 27.10 | 29.10 |
| **M_{w} AGP or 1^{st} peak (x 10⁶)** | 2.10 | 3.68 | 3.02 | 3.20 | 3.83 | 2.94 | 2.93 |
| **% mass (AGP)/or 1^{st} peak** | 10.85 | 15.20 | 11.94 | 15.04 | 8.83 | 9.64 | 8.80 |
| **Rg-AGP or 1^{st} peak** | 31 | 37 | 26 | 32 | 44 | 32 | 45 |
| **M_{w} (AG+GP) (x10⁵)** | 3.66 | 7.47 | 7.93 | 8.02 | 5.65 | 6.62 | 4.95 |
| **% mass (AG+GP)** | 89.15 | 84.80 | 88.06 | 84.8 | 91.17 | 90.36 | 91.20 |

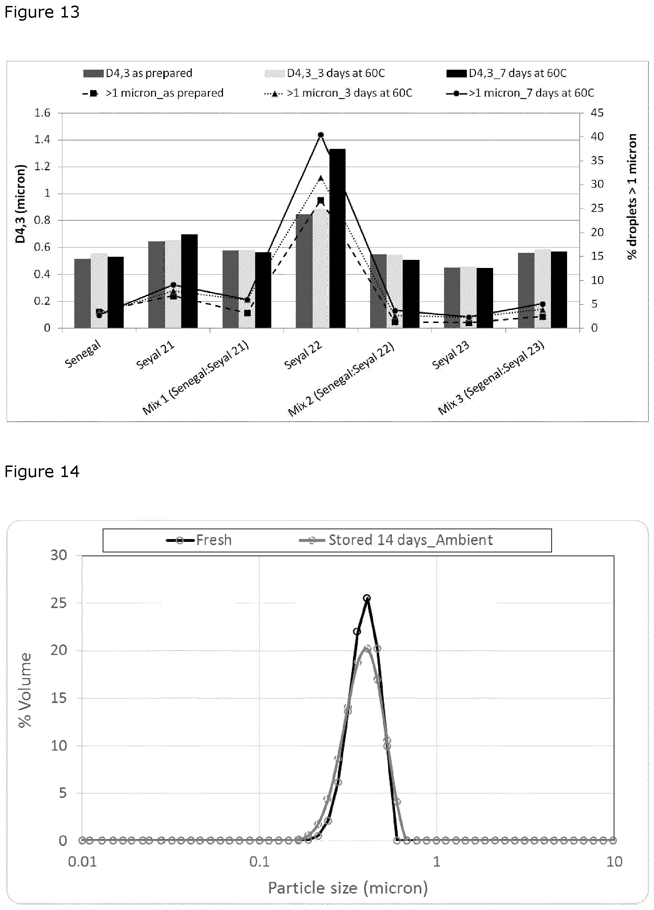

The emulsification performance and stability were evaluated using the methods outlined above and the results shown in Figure 13. Figure 13 shows the volume weighted mean (D4,3) and % droplet greater than 1 micron for fresh emulsion and those measured after stress acceleration for 3 and 7 days at 60°C *for Senegal, seyal* and mixes prepared at 20% gum Arabic : 20T MCT oil. First, the emulsion performance of Acacia Senegal samples chosen in this example gives D4,3 and % droplets greater than 1 micron show very little changes after acceleration which indicates excellent behaviour typical of good emulsifier. The actual proportion of the initial droplet greater than 1 micron as well as the D4,3 depend on the pressure homogenisation used during the homogenisation process. The method used was kept consistent at 50MPa and two passes for all emulsions made as part of the investigation. The aim is, therefore, to demonstrate how these emulsions, made using different samples, can be compared under the same conditions of processing. The *seyal* samples chosen in this example show good, average and poor emulsification performance with initial D4,3 values of 0.674, 0.846 and 0.452 µm. These values are compared to *Acacia Senegal* with initial D4,3 value of 0.515 ∝m prepared at the same concentration and processing conditions. Good performance is associated with low proportion of droplets higher than 1 micron and very small changes following acceleration at 60°C for 3 and days. This can be clearly seen for sample seyal 23. Poor performance is associated with initial high % droplet greater than 1 micron and significant changes following acceleration as can be clearly seen in seyal 22. *Seyal* No.21 show an average performance compared between *Seyal sample* No.22 and 23. Upon mixing these samples with acacia Senegal at 50:50 the emulsification results is also shown in Figure 13. The results show than an average or comparable performance from *senegal* and *seyal* can obtained as seen in Mix 1 and 2 respectively. Additionally, it is also possible to significantly improve the emulsification of poor *acacia seyal* (No.22) as seen from the resultant Mix 2. Mix 2 gave very low droplet size initially and after acceleration for 7 days at 60C the % droplet greater than 1 micron remains below 5% which is comparable to good *acacia Senegal.* Without being bound to a theory, we explain these improvements in the emulsification as being due to the formation of an interface as a results of obtaining optimum distribution with molecules from seyal that are able to reach the interface quickly and thus lower the surface tension and larger molecules such as those present the AGP fraction in *acacia Senegal.* The latter is mainly responsible for the emulsion stability through adsorption onto oil.

### Example 6: Cloud emulsion

In this example, a typical recipe for cloud emulsion made on a large scale and further to the previous examples given with MCT oil shown in Figure 13 is given.

*Acacia seyal* (No. 23) is used together with *Acacia senegal* variety *senegal* (Sample No. 5, M_{w} 6.57 x 10⁵), 11.1% AGP content). The dissolution method to prepare 1000Kg of 20 wt% of *Acacia seyal* or 15 wt% Acacia seyal with 5 wt% *Acacia senegal* was carried out as follows: Appropriate weight (see Table 7 below) of gum arabic was added to deionised water at 10-15 °C and stirred using IKA- RW20 digital with 900 rpm, for 8 hours. Subsequently citric acid (at 46.5%) was added to the solution while stirring for 5 min. The solution was then pasteurised at 80°C/10 min. The viscosity, measured by Brookfield viscometer was 43.4 mPa.s for *Acacia seyal* alone and 40.1 mPa.s for *Acacia seyal* at 15 wt% mixed with 5 wt% *Acacia senegal.*

Table 8 gives the details of preparing the emulsion described as follows. For preparing of the oil phase ester gum was dissolved in orange Oil using IKA-RW20 digital mixer operated at 400 rpm, for 3 hours. Water phase was prepared by mixing of gum solution with citric acid, potassium sorbate and cold deionized water by using IKA- RW20 digital mixer at 400 rpm, for 10 min. The pre-emulsion was prepared by adding the oil phase to the water phase using Utra Turrax T50 basic high shear mixer, for 5 min operated at 10 000 rpm. The pre-emulsion was homogenized 3 times with 250/50 bar with high pressure homogeniser (Gaulin APV Typ LAB 60/60-TBS).

**Table 7. Examples recipe for the preparation of gum solution**

| Gum Arabic 20% Solution | 1000 | KG |
|---|---|---|
| | | |
| cold deionized water 10-15 °C | 786 | KG |
| Citric acid 46.5 % E330 Liquid | 14 | KG |
| Acacia seyal (sample No. 23) | 150 | KG |
| Acacia senegal kibbled (Sample No. 5) | 50 | KG |

**Table 8. Oil in water emulsion recipe made using gum Arabic at 12 wt% : oil phase at 15 wt%.**

| Cloud emulsion | 1,000.00 | KG |
|---|---|---|
| | | |
| cold deionized water 10-15 °C | 233 | KG |
| Potassium sorbate solution 10% | 10 | KG |
| Citric acid 46.5 % E330 liquid | 7 | KG |
| Gum Arabic 20 wt% Solution | 600 | KG |
| Orange Terpenes | 71.75 | KG |
| stabiliser glycerol esters of wood rosins (E445) | 78.25 | KG |

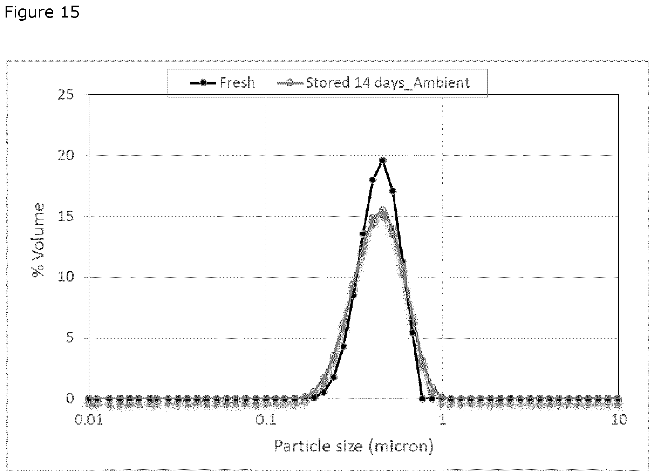

The droplet size distribution for fresh and stored (14 days at ambient temperature) emulsions made using *Acacia seyal* alone and mixture (15 wt% *Acacia seyal* and 5 wt% *Acacia senegal*) results are shown in Figure 14 and 15 respectively.

The results shown in Figure 14 and 15 show excellent initial emulsification performance, whereby all droplets are well below 1 micron, for emulsion made using *Acacia seyal* alone and a mixture of *Acacia seyal* and *Acacia senegal* at 12 wt% gum arabic and 15% oil phase. Both emulsion show excellent stability following storage at ambient temperature for 14 days and very small changes in the proportion of larger droplets are formed and maintain the quality of being all below 1 micron. The results given in Figures 14 and 15 further confirm the application of the method using different oil phase and also produced at much larger scale compared to those given in previous examples with MCT oil shown in Figure 13.

### Example 7:

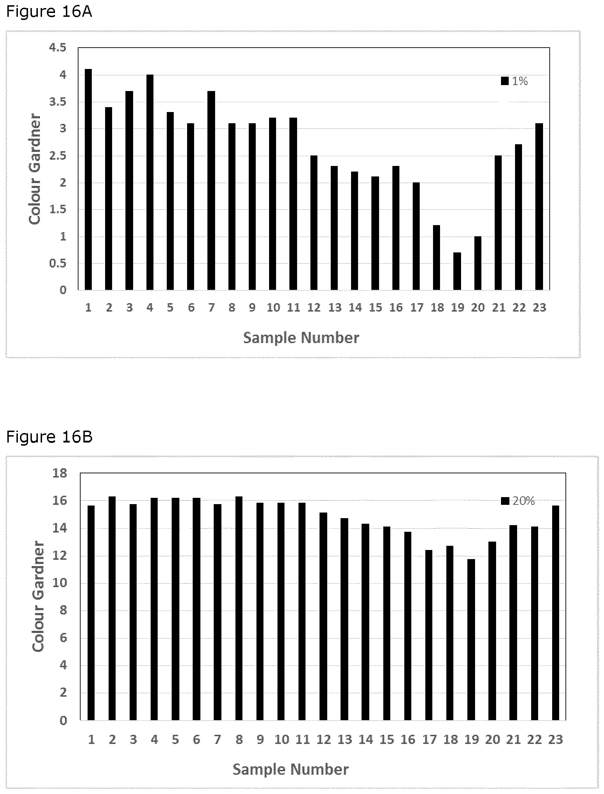

The colour Garnder index of the samples was measured and is shown in figure 16.

All references cited herein are incorporated by reference to the full extent to which the incorporation is not inconsistent with the express teachings herein.

### References

1. Maslin, B. R., Miller, J. T. and Seigler, D. S. (2003) Overview of the generic status of Acacia (Leguminosae: Mimosoideae), Australian Systematic Botany, 16, 1-18
2. Coppen, J. J. W. (1995) in Non-wood forest products No.6, FAO, Rome
3. JECFA-FAO Food and Nutrition paper, FNP 52 Add6, 1998
4. Anderson, D. M. W. and Bridgeman, M. M. E. (1985) Studies of uronic-acid materials .76. the composition of the proteinaceous polysaccharides exuded by astragalus-microcephalus, astragalus-gummifer and astragalus-kurdicus - the sources of turkish gum tragacanth, Phytochemistry, 24, 2301-2304
5. Marina Andres-Brull, Ishragha G. Abdalla, Jesus Cirre, James Edwards, Mohammed E. Osman, Glyn O Phillips, Saphwan Al-Assaf. Studies on Acacia gums: Part VII: Effect of exudates form and tree age on the characteristics of Acacia seyal var. seyal and Acacia seyal var. fistula. Food Hydrocolloids 45 (2015) 279-285
6. Anderson, D. M. W. and Stoddart, J. F. (1966) Studies on uronic acid materials. Part XV. The use of molecular sieve chromatography in studies on Acacia senegal gum (gum arabic). Carbohydr. Res., 2, 104-114
7. Anderson, D. M. W., Hirst, S. E. and Rahman, S. (1967) Studies on uronic acid materials. Part XVIII. Light-scattering studies on some molecular weight fractions form Acacia senegal gum, Carbohydr. Res., 3, 308-317
8. (Jurasek, P., Varga, S. and Phillips, G. O. (1995) Classification of natural gums: VII. Relationships between the series Vulgares (Acacia senegal) and Gummiferae (Acacia seyal), Food Hydrocolloids, 9, 17-34
9. (Jurasek, P., Kosik, M. and Phillips, G. O. (1993) A Chemometric study of the genus Acacia (gum arabic) and related natural gums, Food Hydrocolloids, 7, 73)
10. (Biswas, B. and Phillips, G. O. (2003) Computation of specific optical rotation from carbohydrate composition of exudate gums Acacia Senegal and Acacia Seyal, Food Hydrocolloids, 17, 177-189
11. Flindt, C., Al-Assaf, S., Phillips, G. O. and Williams, P. A. (2005) Studies on acacia exudate gums. Part V. Structural features of Acacia seyal, Food Hydrocolloids, 19, 681-701
12. Hassan, E. A., Al-Assaf, S., Phillips, G. O. and Williams, P. A. (2005) Studies on Acacia gums: Part III molecular weight characteristics of Acacia seyal var. seyal and Acacia seyal var sistula, Food Hydrocolloids, 19, 669-677
13. Street, C. A. and Anderson, D. M. W. (1983) Refinement of structures previously proposed for gum arabic and other acacia gum exudates, Talanta, 30, 887-893
14. Churms, S. C., Merrifield, E. H. and Stephen, A. M. (1983) Some new aspects of the molecular-structure of acacia-senegal gum (gum arabic), Carbohydr. Res., 123, 267-279
15. Nie, S.-P., Wang, C., Cui, S. W., Wang, Q., Xie, M.-Y., & Phillips, G. O. (2013). The core carbohydrate structure of Acacia seyal var. seyal (Gum arabic). Food Hydrocolloids 32, 221-227
16. Randall, R. C., Phillips, G. O. and Williams, P. A. (1988) The role of the proteinaceous component on the emulsifying properties of gum arabic, Food Hydrocolloids, 2, 131-140
17. Randall, R. C., Phillips, G. O. and Williams, P. A. (1989) Fractionation and characterization of gum from Acacia-senegal., Food Hydrocolloids, 3, 65-75
18. Williams, P. A. and Phillips, G. O. (2000) in Handbook of hydrocolloids (P. A. Williams, Ed.) pp 155-168, CRC Press, Cambridge, England
19. Siddig, N. E., Osman, M. E., Al-Assaf, S., Phillips, G. O. and Williams, P. A. (2005) Studies on acacia exudate gums, part IV. Distribution of molecular component in Acacia seyal in relation to Acacia senegal, Food Hydrocolloids, 19, 679-686
20. Flindt, C., Al-Assaf, S., Phillips, G. O. and Williams, P. A. (2005) Studies on acacia exudate gums. Part V. Structural features of Acacia seyal, Food Hydrocolloids, 19, 681-701
21. Fauconnier, M.-L., Blecker, C., Groyne, J., Razafindralambo, H., Vanzeveren, E., Marlier, M. and Paquot, M. (2000) Characterization of two Acacia gums and their fractions using a langmuir film balance., J. Agric. Food Chem., 48, 2709-2712
22. Elmanan, M., Al-Assaf, S., Phillips, G. O., & Williams, P. A. (2008). Studies on Acacia exudate gums: Part VI. Interfacial rheology of Acacia senegal and Acacia seyal. Food Hydrocolloids, 22(4), 682-689
23. Buffo, R. A., Reineccius, G. A. and Oehlert, G. W. (2001) Factors affecting the emulsifying and rheological properties of gum acacia in beverage emulsion, Food Hydrocolloids, 15, 53-66
24. Al-Assaf, S., Cirre, J., Andres-Brull, M., Phillips., G.O. Correlation of Acacia gum characteristics with functional properties. Foods & Food Ingredients Journal of Japan Vol 3, 337-381 (2008).
25. Al-Assaf, S., et al., Food Hydrocolloids, 19: 647-660 (2005); Al-Assaf,S.,et al.,Food Hydrocolloids, 21: 319-328 (2007) (www.cybercolloids.net/library/jecfa/gum-arabic)
26. Marina Andres-Brull, Ishragha G. Abdalla, Jesus Cirre, James Edwards, Mohammed E. Osman, Glyn O Phillips, Saphwan Al-Assaf. Studies on Acacia gums: Part VII: Effect of exudates form and tree age on the characteristics of Acacia seyal var. seyal and Acacia seyal var. fistula. Food Hydrocolloids 45 (2015) 279-285
27. Elmanan, M., Al-Assaf, S., Phillips, G. O., & Williams, P. A. (2008). Studies on Acacia exudate gums: Part VI. Interfacial rheology of Acacia senegal and Acacia seyal. Food Hydrocolloids, 22(4), 682-689
28. Hassan, E. A., Al-Assaf, S., Phillips, G. O. and Williams, P. A. (2005) Studies on Acacia gums: Part III molecular weight characteristics of Acacia seyal var. seyal and Acacia seyal var sistula, Food Hydrocolloids, 19, 669-677
29. Elmanan, M., Al-Assaf, S., Phillips, G. O., & Williams, P. A. (2008). Studies on Acacia exudate gums: Part VI. Interfacial rheology of Acacia senegal and Acacia seyal. Food Hydrocolloids, 22(4), 682-689
30. Dickinson, E. (2003) Hydrocolloids at interfaces and the influence on the properties of dispersed system, Food Hydrocolloids, 17, 25-39
31. E. A. Hassan, S. Al-Assaf, G.O. Phillips and P.A. Williams. Studies on Acacia Gums: Part III Molecular Weight Characteristics of Acacia seyal var. seyal and Acacia seyal var fistula.Food Hydrocolloids 19, 669-677 (2005)
32. S. Al-Assaf, G. O. Phillips and P. A. Williams. Studies on Acacia Exudate Gums. Part I: The Molecular Weight of Acacia senegal Gum Exudate. Food Hydrocolloids 19, 647-660 (2005)
33. S. Al-Assaf, G.O. Phillips and P.A. Williams. Studies on Acacia exudates gums: Part II Molecular Weight Comparison of the Vulgares and Gummiferae series of Acacia gums. Food Hydrocolloids 19, 661-677 (2005)

## Claims

1. A method for preparing an improved gum arabic comprising the steps of
- providing a gum arabic from *acacia seyal*
- selecting gum arabic having a tannin content > 700 ppm (w/w),
wherein the improved gum arabic has improved emulsification performance.

2. The method of claim 1, wherein the gum arabic from *acacia seyal* is selected from gum arabic of *acacia seyal* var., *acacia seyal* var. *fistula* and mixtures thereof.

3. The method of claim 1 or 2, wherein the tannin content is >750 ppm (w/w), > 1000 or > 2000 ppm (w/w).

4. The method of any one of claims 1 to 3, wherein the gum has
i) a colour Garnder index of at least 2.5, more preferably 2.5-3.0 and even more preferably > 3 at 1 wt% in water or
ii) a colour Garnder index of at least 15, more preferably 15-16 and even more preferably > 16 at 20 wt% in water.

5. A process for improving gum arabic comprising the steps of
- providing gum arabic
- preparing a dispersion of gum arabic
- adding a phenol source selected from bark, polyphenols and gallic acid,
wherein the improved gum arabic has improved emulsification performance.

6. The process of claim 5 wherein the gum arabic is gum arabic of acacia seyal, gum arabic of acacia Senegal or a mixture thereof.

7. The process of claim 5 or 6 wherein the ratio (w/w) of gum arabic: phenol source is 100:1 to 100:5.

8. A composition comprising
- gum arabic
- an added phenol source selected from bark, polyphenols and gallic acid.

9. The composition of claim 8 wherein the gum arabic is gum arabic of acacia seyal, gum arabic of acacia senegal or a mixture thereof.

10. The composition of claim 8 or 9 wherein the gum arabic from *acacia seyal* is selected from gum arabic of *acacia seyal* var., *acacia seyal* var. *fistula* and mixtures thereof.

11. A method for improving gum arabic of *acacia senegal* comprising the step of:
- combining gum arabic of acacia seyal with gum arabic of acacia senegal,
wherein the improved gum arabic has improved emulsification performance.

12. A composition comprising
- gum arabic of acacia seyal
- gum arabic of acacia senegal.

13. The method of claim 11 or the composition of claim 12 wherein the gum arabic of acacia seyal has a tannin content > 700 ppm (w/w).

14. Emulsion comprising water, oil and a composition of any one of claims 8 to 10 or 12.

15. Beverage or food comprising the emulsion of claim 14.

## Patentansprüche

1. Verfahren zur Herstellung eines verbesserten Gummi arabicum, umfassend die Schritte
- Bereitstellen eines Gummi arabicum von *Acacia seyal;*
- Auswählen eines Gummi arabicum mit einem Tanningehalt von > 700 ppm (w/w),
wobei das verbesserte Gummi arabicum eine verbesserte Emulgationsleistung aufweist.

2. Verfahren gemäß Anspruch 1, wobei das Gummi arabicum von *Acacia seyal* aus Gummi arabicum von *Acacia seyal* var., *Acacia seyal* var. fistula und Gemischen davon ausgewählt ist.

3. Verfahren gemäß Anspruch 1 oder 2, wobei der Tanningehalt > 750 ppm (w/w), > 1000 oder > 2000 ppm (w/w) ist.

4. Verfahren gemäß einem der Ansprüche 1 bis 3, wobei das Gummi aufweist:
i) einen Gardner-Farbindex von wenigstens 2,5, besonders bevorzugt 2,5-3,0 und ganz besonders bevorzugt > 3 bei 1 Gew.-% in Wasser oder
ii) einen Gardner-Farbindex von wenigstens 15, besonders bevorzugt 15-16 und ganz besonders bevorzugt > 16 bei 20 Gew.-% in Wasser.

5. Verfahren zur Verbesserung von Gummi arabicum, umfassend die Schritte
- Bereitstellen von Gummi arabicum,
- Herstellen einer Dispersion aus Gummi arabicum,
- Hinzufügen einer Phenolquelle, die aus Rinde, Polyphenolen und Gallsäure ausgewählt ist, wobei das verbesserte Gummi arabicum eine verbesserte Emulgationsleistung aufweist.

6. Verfahren gemäß Anspruch 5, wobei es sich bei dem Gummi arabicum um Gummi arabicum von *Acacia seyal,* Gummi arabicum von *Acacia senegal* oder ein Gemisch davon handelt.

7. Verfahren gemäß Anspruch 5 oder 6, wobei das Gewichtsverhältnis von Gummi arabicum:Phenolquelle 100:1 bis 100:5 beträgt.

8. Zusammensetzung, umfassend:
- Gummi arabicum
- eine hinzugefügte Phenolquelle, die aus Rinde, Polyphenolen und Gallsäure ausgewählt ist.

9. Zusammensetzung gemäß Anspruch 8, wobei es sich bei dem Gummi arabicum um Gummi arabicum von *Acacia seyal,* Gummi arabicum von *Acacia senegal* oder ein Gemisch davon handelt.

10. Zusammensetzung gemäß Anspruch 8 oder 9, wobei das Gummi arabicum von *Acacia seyal* aus Gummi arabicum von *Acacia seyal* var., *Acacia seyal* var. fistula und Gemischen davon ausgewählt ist.

11. Verfahren zur Verbesserung von Gummi arabicum von *Acacia senegal,* umfassend den Schritt:
- Kombinieren von Gummi arabicum von *Acacia seyal* mit Gummi arabicum von *Acacia senegal,*
wobei das verbesserte Gummi arabicum eine verbesserte Emulgationsleistung aufweist.

12. Zusammensetzung, umfassend:
- Gummi arabicum von *Acacia seyal*
- Gummi arabicum von *Acacia senegal.*

13. Verfahren gemäß Anspruch 11 oder Zusammensetzung gemäß Anspruch 12, wobei das Gummi arabicum von *Acacia seyal* einen Tanningehalt von > 700 ppm (w/w) aufweist.

14. Emulsion, die Wasser, Öl und eine Zusammensetzung gemäß einem der Ansprüche 8 bis 10 oder 12 umfasst.

15. Getränk oder Nahrung, umfassend die Emulsion gemäß Anspruch 14.

## Revendications

1. Procédé de préparation d'une gomme arabique améliorée comprenant les étapes de
- fourniture d'une gomme arabique provenant *d'acacia seyal*
- sélection de gomme arabique ayant une teneur en tannin > 700 ppm (p/p),
dans lequel la gomme arabique améliorée présente une performance d'émulsification améliorée.

2. Procédé selon la revendication 1, dans lequel la gomme arabique provenant d'*acacia seyal* est choisie parmi la gomme arabique d'*acacia seyal* var., *acacia seyal* var. *fistula* et des mélanges de ceux-ci.

3. Procédé selon la revendication 1 ou 2, dans lequel la teneur en tannin est > 750 ppm (p/p), > 1 000 ou > 2 000 ppm (p/p).

4. Procédé selon l'une quelconque des revendications 1 à 3, dans lequel la gomme présente
i) un indice Gardner de couleur d'au moins 2,5, de préférence de 2,5 à 3,0 et de manière encore davantage préférée > 3 à 1 % en poids dans l'eau ou
ii) un indice Gardner de couleur d'au moins 15, de préférence de 15 à 16 et de manière encore davantage préférée > 16 à 20 % en poids dans l'eau.

5. Processus d'amélioration de gomme arabique comprenant les étapes de
- fourniture de gomme arabique
- préparation d'une dispersion de gomme arabique
- ajout d'une source de phénol choisie parmi l'écorce, les polyphénols et l'acide gallique, dans lequel la gomme arabique améliorée présente une performance d'émulsification améliorée.

6. Processus selon la revendication 5, dans lequel la gomme arabique est une gomme arabique d'*acacia seyal,* une gomme arabique d'acacia Senegal ou un mélange de ceux-ci.

7. Processus selon la revendication 5 ou 6, dans lequel le rapport (p/p) de gomme arabique: source de phénol est de 100:1 à 100:5.

8. Composition comprenant
- de la gomme arabique
- une source de phénol ajoutée choisie parmi l'écorce, des polyphénols et l'acide gallique.

9. Composition selon la revendication 8, dans laquelle la gomme arabique est la gomme arabique d'acacia seyal, la gomme arabique d'acacia senegal ou un mélange de celles-ci.

10. Composition selon la revendication 8 ou 9, dans laquelle la gomme arabique provenant d'*acacia seyal* est choisie parmi la gomme arabique d'*acacia seyal* var., *acacia seyal* var. *fistula* et des mélanges de celles-ci.

11. Procédé d'amélioration de gomme arabique d'*acacia senegal* comprenant l'étape de :
- combinaison de gomme arabique d'acacia seyal avec de la gomme arabique d'acacia senegal,
dans lequel la gomme arabique améliorée présente une performance d'émulsification améliorée.

12. Composition comprenant
- de la gomme arabique d'acacia seyal
- de la gomme arabique d'acacia senegal.

13. Procédé selon la revendication 11 ou composition selon la revendication 12, dans lequel ou laquelle la gomme arabique d'acacia seyal a une teneur en tannin > 700 ppm (p/p).

14. Emulsion comprenant de l'eau, de l'huile et une composition de l'une quelconque des revendications 8 à 10 ou 12.

15. Boisson ou aliment comprenant l'émulsion de la revendication 14.
